# FASCICULE DE BREVET EUROPEEN

(11) **EP 1 940 132 B1**
(45) Date de publication et mention de la délivrance du brevet: **02.09.2015**
(21) Numéro de dépôt: 07291648.9
(22) Date de dépôt: 31.12.2007
(51) Int. Cl.: H04L 29/12, H04W 8/26, H04W 76/00, H04L 29/08

(54) **Système et procédé de gestion de joignabilité via au moins un réseau de communication**
System und Verfahren zur Verwaltung von Erreichbarkeitsdaten in zu mindestens einem Kommunikationsnetz
System and method for reachability management through at least one communication network

(30) Priorité: 31.12.2006 FR 0611550
(43) Date de publication de la demande: 02.07.2008
(73) Titulaire: Société Française du Radiotéléphone, 75008 Paris (FR)
(72) Inventeur: Ha, Thanh-Luu, 77600 Bussy Saint Georges (FR); De Moissac, Arnaud, 75017 Paris (FR)
(74) Mandataire: Debay, Yves

(56) Documents cités:
- EP-A- 0 949 787
- WO-A-01/58113
- WO-A-02/075572
- WO-A-2005/029889
- US-A1- 2005 182 781

## Description

La présente invention concerne le domaine des communications électroniques en général. En effet, l'invention concerne l'ensemble des communications électroniques reposant sur différents média de communication tels que la téléphonie (les téléphones fixes) ou la téléphonie mobile, ainsi que les différents média de communication supportés par les réseaux de type Internet. Les réseaux de type Internet sont désormais accessibles, entre autres, via les réseaux de téléphonie mobile et offrent de nombreux outils de communication, tels que la navigation Internet classique mais également, par exemple, les messageries électroniques (e-mail, selon la terminologie anglaise, ou courriel, selon la terminologie française), les blogs et les forums, ou les messageries instantanées. Les messageries instantanées, tels que, par exemple, les messageries SIP (« Session Initiation Protocol » selon la terminologie anglaise) ou les messageries MSN® ou Windows Live Messenger® ou encore Skype®, permettent aux utilisateurs de dialoguer par des messages en texte (« chat », selon la terminologie classiquement utilisée dans le domaine) en direct par Internet et permettent également aux utilisateurs de faire des vidéo conférences ou simplement de tenir des conversations vocales par Internet (appelées selon la terminologie anglaise VoIP, pour « Voice Over IP », l'abréviation IP signifiant « Internet Protocol »). Tous ces moyens de communications sont désormais accessibles à partir de différents types de terminaux communicants, notamment grâce à l'évolution des réseaux de communication déployés par les opérateurs de communication. Ces terminaux communicants peuvent donc consister aujourd'hui en n'importe quel type de terminal électronique comportant des moyens de traitement de données suffisamment puissants pour supporter les différentes applications et des moyens de communication via au moins un réseau de communication. Par exemple, on peut aujourd'hui communiquer sur tous ces média à partir d'un téléphone mobile, notamment de 3° génération, d'un ordinateur, d'un assistant personnel (PDA, pour l'anglais « Personal Digital Assistant »), munis de moyens de communication via au moins un réseau de communication, etc. Ainsi, les utilisateurs de tous ces moyens de communication modernes possèdent en général plusieurs identifiants de communication, c'est-à-dire des numéros de téléphone (fixe et/ou mobile), des adresses email, des identifiants de messagerie, voire des noms de domaine ou des adresses de liens pour leurs blogs etc.

Un premier inconvénient dans ce domaine en plein développement des communications électroniques modernes concerne justement le fait que chacun des utilisateurs possède de nombreux identifiants de communication que leurs correspondants doivent connaître pour pouvoir les joindre sur les différents média de communication.

Un second inconvénient concerne le fait que les identifiants de communication d'un utilisateur peuvent changer au cours du temps (par exemple lorsqu'il change d'opérateur) et que ses correspondants n'en sont pas forcément avertis ou que l'utilisateur doive les avertir, ce qui s'avère souvent problématique et au moins laborieux. Une solution, connue sous le nom « ENUM » (pour l'anglais « tElephone NUmber Mapping ») et définie dans la norme RFC 2916 de l'IETF (pour l'anglais « Request For Comment » du détachement d'ingénierie Internet ou « Internet Engineering Task Force » selon la terminologie anglaise), consiste en ce que chaque utilisateur ait un numéro principal, dit numéro unique, appelé «e164» dans les recommandations de l'union Internationale des Télécommunications (UIT, ou ITU pour l'anglais « International Telecommunication Union »). Ce numéro unique, appelé « ENUM ci-après, sera, à terme, utilisé pour toutes les communications électroniques quel que soit le média, de façon à simplifier l'utilisation des moyens modernes de communication. Ce numéro unique « e164 » ou « ENUM » est enregistré dans une base de données, accessible selon le système des noms de domaine (DNS, pour l'anglais « Domain Name System) grâce auquel un identifiant d'adresse Internet (tel qu'une adresse IP) est associé à un nom de domaine plus facile à retenir (cette corrélation entre les adresses IP et les noms de domaine associés étant appelée « résolution des noms de domaine »). Les identifiants de communication utilisés dans le système DNS sont, quelque soit le média et la technologie utilisés, regroupés sous le terme de « Nom de Domaine totalement qualifié » (FQDN, pour l'anglais « Fully Qualified Domain Name »). Ils pourront, selon la technologie, le média et le protocole utilisés, consister en des numéros de téléphone (par exemple les « telURI », pour « telephone Universal Resource Identifier » de la RFC 3966 désignant les identifiants de communication téléphonique), des adresses mails, ou des identifiants Internet tels que les URI (pour l'anglais « Uniform Resources Identifier »), ou même les URL (pour l'anglais « Uniform Resource Locator ») ou les URN (pour l'anglais « Uniform Resource Name ») pour autant que les adressages soient résolus. Ainsi, le système ENUM permet d'associer une pluralité d'identifiants de communication à un seul et unique numéro. Pour cela, le numéro unique, défini dans là norme comme une clé de recherche dénommée « e164 » et inscrit auprès de l'ITU (pour éviter que deux utilisateurs aient des numéros identiques), consiste en un numéro de téléphone auquel on ajoute le code du pays, dans lequel on insère un point (.) entre chaque caractère et dont on inverse la séquence avant d'y ajouter le suffixe « e.164.arpa » indiquant la racine des noms de domaine du système ENUM. Ainsi, ce numéro permet d'établir une requête DNS, appelée requête NAPTR (pour l'anglais « eNum Authority PoinTeR ») pour obtenir du serveur DNS contenant la base de données une réponse, appelée NAPTR_RR (pour l'anglais « eNum Authority PoinTeR Resource Record »), contenant tous les identifiants de communication dé l'utilisateur de ce numéro. La norme d'aujourd'hui définit d'autres champs dans les requêtes NAPTR, notamment pour l'ordre de présentation des identifiants de communication et la norme RFC 3953 définit une gestion de la présence de l'utilisateur. Cependant, la norme ne prévoit pas d'utilisation de ces champs supplémentaires ni de réelle gestion de la présence puisque l'utilisateur est considéré comme étant joignable sur n'importe lequel des média correspondant à ses identifiants de communication et le système ne permet pas de savoir sur quel média l'utilisateur est présent.

Un troisième inconvénient dans ce domaine, lié aux inconvénients et problèmes précédents et non résolu par cette solution ENUM, concerne la joignabilité de l'utilisateur sur au moins un terminal communicant, via au moins un média de communication. En effet, le système ENUM permet de connaître tous les identifiants d'un utilisateur mais ne permet pas de savoir, à un instant donné, sur lequel il est joignable ou sur lequel il souhaite être joint.

Un quatrième inconvénient, également lié aux inconvénients et problèmes précédents et non résolu (voire engendré) par la solution ENUM, concerne la confidentialité des identifiants de communication d'un utilisateur. En effet, il se peut qu'un utilisateur qui fournit un de ses identifiants à un correspondant (un contact), ne souhaite pas que ce dernier ait accès à tous ses identifiants de communication.

Un cinquième inconvénient, également lié aux inconvénients et problèmes précédents et non résolu (voire engendré) par la solution ENUM, concerne le fait qu'un utilisateur cherchant à joindre un correspondant reçoit une liste d'identifiants de communication dont certains ne sont pas compatibles avec le terminal (ou le média) utilisé par ce correspondant pour joindre l'utilisateur.

Un sixième inconvénient, également lié aux inconvénients et problèmes précédents et non résolu (voire engendré) par la solution ENUM, concerne le fait que les requêtes d'obtention des identifiants de communication classiquement utilisées dans les systèmes DNS sont envoyées via des ports de communication qui sont très souvent bloqués par les systèmes de protection tels que les pare-feux (« Fire-Wall », selon la terminologie anglaise). Ainsi, l'utilisateur qui souhaite obtenir les identifiants d'un de ses correspondants n'arrive pas forcément à envoyer de requête, par exemple de type NAPTR, selon la configuration de son terminal et/ou du réseau local dans lequel il se trouve.

Il est connu également de l'art antérieur, notamment par la demande US 2005/182781 A1, des solutions proposant un serveur de gestion de la joignabilité, comportant une interface de conversion pour permettre aux terminaux des utilisateurs de dialoguer avec le serveur et permettre aux utilisateurs de gérer des données définissant leur joignabilité et de consulter ou mettre à jour leurs identifiants de communication dans une base de données d'un serveur ENUM.

Dans ce contexte, il est intéressant de proposer une solution permettant à la fois de simplifier l'utilisation des différents média de communication et de permettre une gestion de la joignabilité des utilisateurs, en garantissant éventuellement une confidentialité des identifiants de communication et en assurant éventuellement une compatibilité entre les média utilisables par les correspondants en permettant leur mise en relation.

Un premier but de la présente invention est donc de supprimer certains inconvénients de l'art antérieur en proposant un système de gestion de la joignabilité d'au moins un utilisateur via au moins un réseau de communication, permettant au moins à cet utilisateur de choisir les media de communication sur lesquels il souhaite être joint en fonction du temps.

Ce but est atteint par un système de gestion de la joignabilité selon la revendication 1.D'autres particularités de divers modes de réalisation d'un tel système sont détaillées dans les revendications dépendantes 2 à 16.

Un second but de la présente invention est donc de supprimer certains inconvénients de l'art antérieur en proposant un procédé de gestion de la joignabilité d'au moins un utilisateur via au moins un réseau de communication, permettant au moins à cet utilisateur de choisir les media de communication sur lesquels il souhaite être joint en fonction du temps.

Ce but est atteint par un procédé de gestion de la joignabilité selon la revendication 17.

D'autres particularités de divers modes de réalisation d'un tel procédé sont détaillées dans les revendications dépendantes 18 à 33.

D'autres particularités et avantages de la présente invention apparaîtront plus clairement à la lecture de la description ci-après, faite en référence aux dessins annexés, dans lesquels :

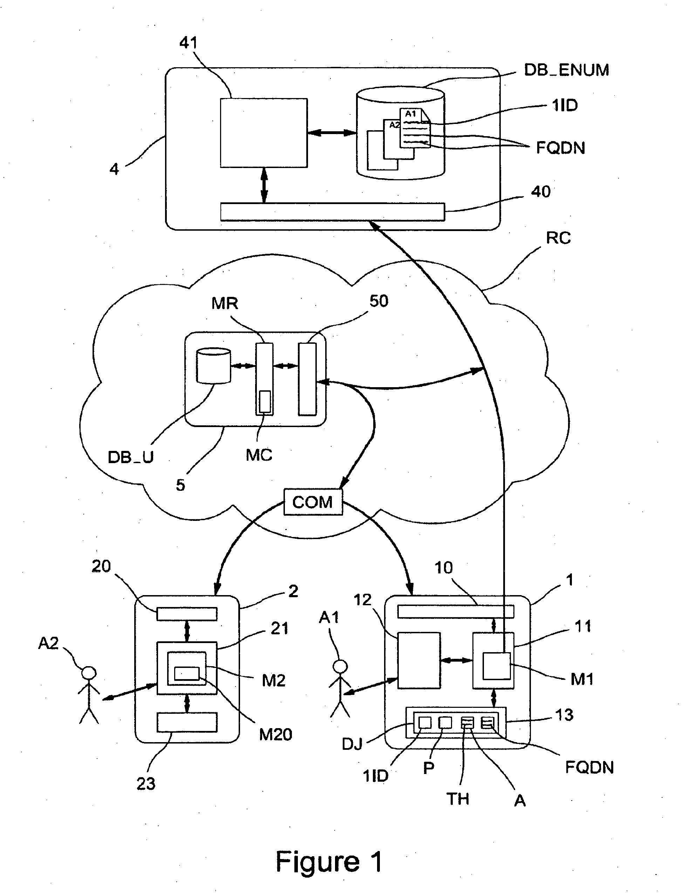

- la figure 1 représente le système selon un mode de réalisation de l'invention,
- la figure 2A représente la hiérarchie des systèmes de centralisation d'une solution connue de l'art antérieur et la figure 2B représente la conversion d'un numéro de téléphone en en identifiant principal, dit numéro unique, ainsi que l'association de ce dernier avec des identifiants de communication,
- la figure 3A représente un exemple d'une partie de profils et de sous-profils dans les données de joignabilité selon un mode de réalisation de l'invention et la figure 3B représente une partie d'un agenda dans les données de joignabilité selon un mode de réalisation de l'invention,

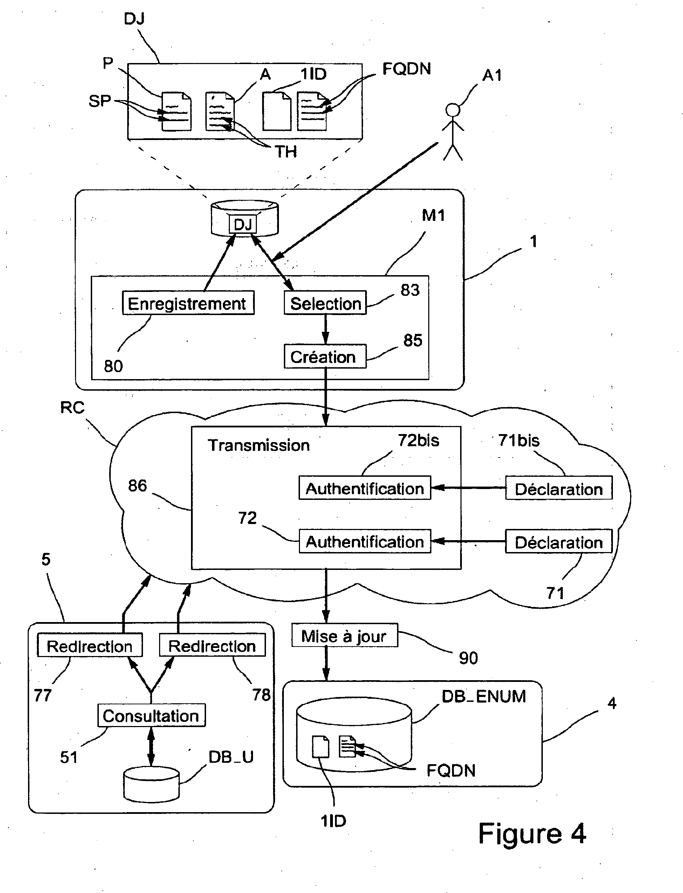

- la figure 4 représente les étapes principales du procédé selon un mode de réalisation de l'invention,

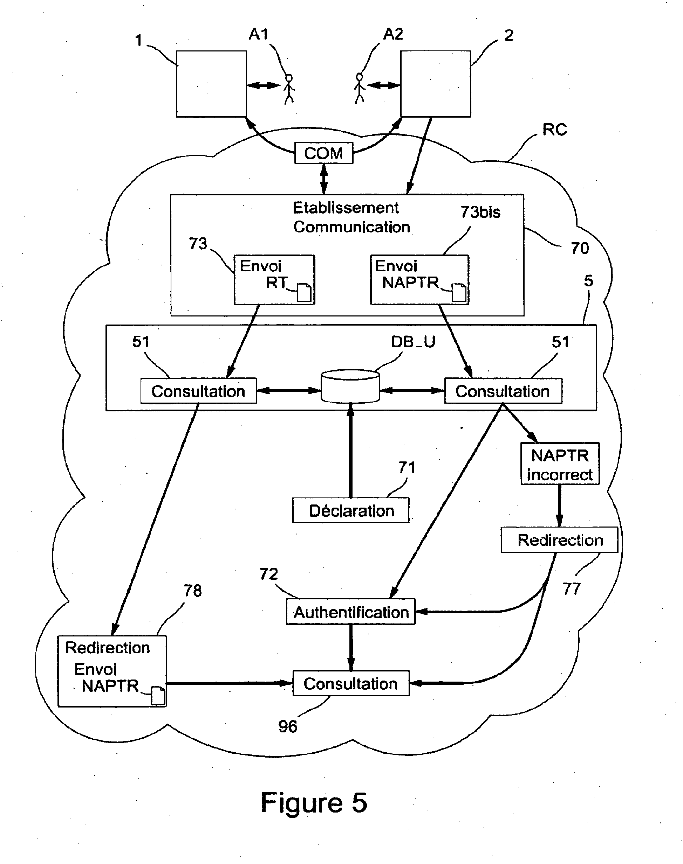

- la figure 5 représente une partie des étapes du procédé selon un mode de réalisation de l'invention,

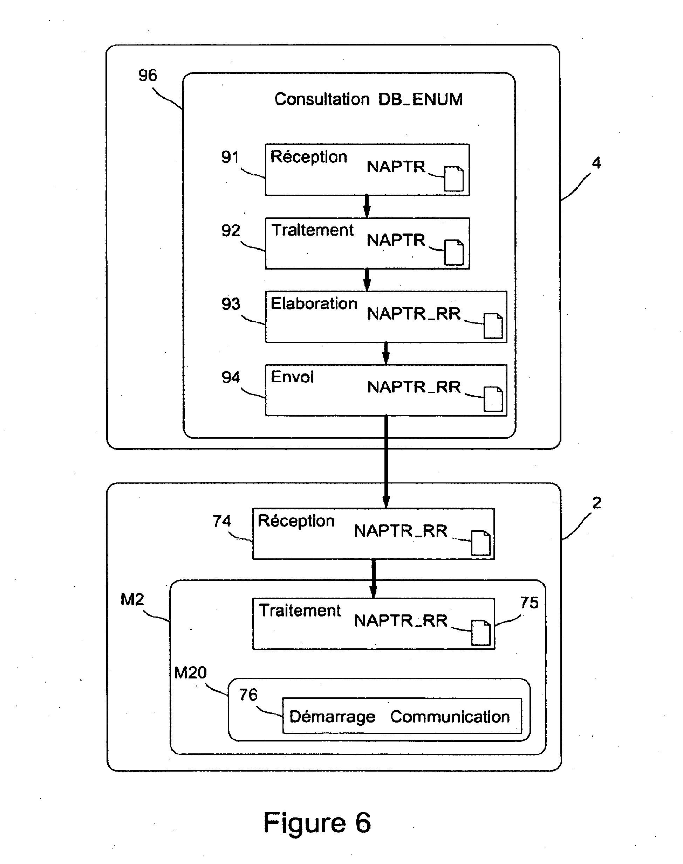

- la figure 6 représente une partie des étapes du procédé selon un mode de réalisation de l'invention,

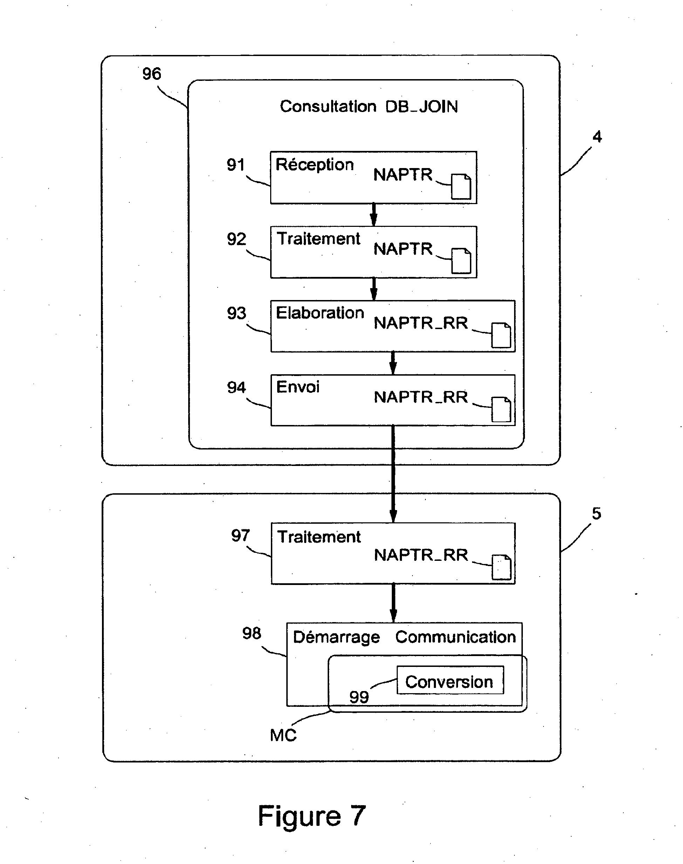

- la figure 7 représente une partie des étapes du procédé selon un mode de réalisation de l'invention.

La présente invention concerne un système et un procédé de gestion de la joignabilité d'au moins un utilisateur, dit appelé (A1), sur au moins un terminal (1) communicant, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant. Par le terme « joignabilité », on entend ici le fait qu'un utilisateur puisse être joint sur un terminal communicant. La notion de joignabilité n'est pas restreinte ici au média de communication utilisé et on considère qu'on joint un utilisateur si on communique avec lui en direct mais également si on communique avec lui en différé, par exemple en lui envoyant un message électronique (par exemple un email ou un SMS) ou en enregistrant un message vocal. De façon générale, la notion de joignabilité correspond ici à l'établissement d'une communication avec un correspondant, à travers tous les média disponibles. L'invention est basée sur l'utilisation des numéros uniques associés aux identifiants de communication des utilisateurs de terminaux communicants, pour offrir différentes fonctionnalités de gestion de la joignabilité des utilisateurs au cours du temps. On considère ici, à titre d'exemple non limitatif, que l'utilisateur ayant enregistré ses identifiants de communication et son numéro « unique » dans la base de données DNS d'un système de type ENUM est un utilisateur « appelé » car cet enregistrement sert à ce qu'il puisse être appelé par ses correspondants (ses contacts). Par le terme « identifiant de communication », on entend ici n'importe quel type d'identifiant qui peut être utilisé pour joindre une personne via un réseau de communication, comme par exemple tout type d'adresse électronique ou de numéro de téléphone. De même, on considère ici, également à titre d'exemple non limitatif, qu'un utilisateur cherchant à joindre cet « appelé » et/ou consultant la base de données DNS d'un système de type ENUM, pour retrouver les identifiants de communication de cet utilisateur « appelé », est un utilisateur « appelant ». Cependant, n'importe quel utilisateur peut bien entendu être appelant ou appelé selon les cas et cette terminologie ne doit être interprétée qu'à titre d'illustration pour expliquer dans quel sens a lieu la mise en relation des deux utilisateurs à un instant donné. L'invention permet d'ailleurs que l'appelant connaisse le numéro « unique » de l'appelé pour obtenir les identifiants de communication, mais également qu'il ne connaisse qu'un seul identifiant de communication de l'appelé et cherche justement à connaître le numéro unique de ce dernier, ou les autres identifiants de communication. Il va donc de soi que l'invention prévoit que le terminal (1) appelé comporte également, en plus de ses moyens de communication et de traitement spécifiques, les mêmes moyens de communication et de traitement que ceux spécifiques du terminal (2) appelant. Inversement, le terminal (2) appelant pourra comporter également, en plus de ses moyens de communication et de traitement spécifiques, les mêmes moyens de communication et de traitement que ceux spécifiques du terminal (1) appelé. Dans ce cas, comme nous le verrons plus loin, le terminal (2) appelant permettra à son utilisateur d'avoir accès à plus de fonctionnalités offertes par la présente invention. N'importe quel terminal comportant les moyens adéquats décrits ici devient un terminal appelant ou appelé selon au moins un mode de réalisation de la présente invention, et l'invention prévoit également, comme expliqué ci-après, que ces différents moyens spécifiques soient transposables d'un terminal à un autre.

Par le terme terminal communicant, qu'il soit appelé ou appelant, on entend ici n'importe quel type de terminal muni de moyens de communication sur au moins un réseau (RC) de communication. En effet, comme mentionné précédemment, les réseaux modernes permettent de communiquer via différents médias. Par exemple, les réseaux de téléphonie mobile permettent une navigation de type Internet mais également l'envoi de courriers électroniques (emails ou courriels, selon les terminologies utilisées d'après les langues respectivement anglaise et française). Un terminal donné pourra donc souvent accéder à différents réseaux de communication et on regroupe ici sous le terme de « au moins un réseau de communication » l'ensemble des réseaux disponibles à partir d'un terminal, sachant que ce terminal peut être de n'importe quel type et que le réseau peut en fait donner accès à plusieurs réseaux différents. Ainsi, à titre d'exemple, le terminal communicant pourra consister en un ordinateur muni d'une connexion Internet ou en téléphone mobile, de dernière génération ou non, pour téléphoner et/ou naviguer sur Internet et/ou sur le WAP (« Wireless Application Protocol ») et/ou envoyer des emails et/ou par n'importe quel type de moyen de communication à courte ou longue distance. L'essentiel ici consiste en ce que le système et le procédé permettent à un utilisateur de définir et gérer, en temps réel, sa joignabilité sur au moins un terminal communicant qu'il a à sa disposition à un instant donné. On décrit donc ici le système et le procédé comme s'inscrivant (étant mis en oeuvre) dans au moins un réseau (RC) de communication. Ce réseau est déployé, de façon connue en soi, par des opérateurs de communication, grâce à un ensemble de terminaux et/ou de serveurs et/ou de relais et/ou d'antennes etc. regroupés ici sous le terme « d'équipement opérateur ». Le système et le procédé s'inscrivant dans cet équipement opérateur, pourront être totalement intégrés dans l'équipement opérateur d'un opérateur de communication, sauf en ce qui concerne les terminaux communicants des utilisateurs bien entendu, puisque ces terminaux ne sont pas intégrés dans l'équipement opérateur mais communiquent grâce à ce dernier. Ainsi, les serveurs du système pourront, dans un mode de réalisation, être implémentés au sein des équipements opérateurs de différents opérateurs de communication. Dans les modes de réalisation décrits ici et dans une seconde demande déposée par la demanderesse en même temps que la présente demande, au moins un équipement opérateur est considéré comme appartenant au système car il permet d'aiguiller (et/ou de rediriger) les différentes communications générées au sein du système et de façon particulièrement avantageuse, permet à un utilisateur d'être joignable sur un ou plusieurs de ces identifiants de communications, qu'il aura choisi(s) au préalable. Dans d'autres modes de réalisation, décrits dans une troisième demande déposée par la demanderesse en même temps que la présente demande, l'invention, au moins pour ce qui concerne la gestion de la joignabilité, ne nécessite pas forcément d'intégration d'un équipement opérateur car celui-ci permet la mise en relation et l'adressage (l'aiguillage au sein du réseau) des données. L'invention décrite ici intègre donc un équipement opérateur par lequel passent les communications et au moins un opérateur de communication mettra en oeuvre les moyens nécessaires pour les transmissions de données requises et la mise en relation des utilisateurs au sein d'au moins un réseau de communication, pour permettre la mise en oeuvre de fonctionnalités nouvelles, comme expliqué en détail ci-après.

La présente invention, bien qu'ayant été préférentiellement développée dans le cadre du développement du système ENUM défini par la norme RFC 2916 de l'IETF, n'est pas limitée à ce seul exemple de système ni à la version actuelle de la norme correspondante. Ainsi, pour définir plus généralement l'invention, celle-ci s'inscrit dans le cadre de la gestion des identifiants de communication des utilisateurs de services de communication, stockés sur au moins un serveur (4) de centralisation, accessible via au moins un réseau (RC) de communication et comprenant au moins une base (DB_ENUM) de données, dite centralisée, stockant des données relatives à une pluralité d'appelés (A1), ces données comportant, pour chaque appelé (A1), un identifiant principal, dit numéro unique (1ID), associé à au moins un identifiant (FQDN) de communication. Ainsi, on ne détaillera pas ici les protocoles utilisés pour l'adressage des données, car l'invention pourra être adaptée en fonction des protocoles utilisés et il est même probable que les fonctionnalités décrites ici soient rendues plus aisées du fait de l'évolution des protocoles standards de communication. Par exemple, une identification de l'utilisateur appelant (décrite plus loin) par le protocole IPv6 sera plus aisée qu'elle ne l'est pour l'instant par le protocole IPv4 utilisé aujourd'hui pour l'envoi de données aux serveurs DNS de centralisation des numéros uniques de type ENUM. De plus, l'identifiant principal ou numéro unique (1ID) est aujourd'hui du type e164, selon les normes en vigueur, mais l'invention permet bien entendu d'utiliser n'importe quel type de format pour cet identifiant principal ou numéro unique (1ID). De même, les média décrits ici ne le sont qu'à titre illustratif car les réseaux de communication modernes permettent de rendre compatibles les communications selon plusieurs média et l'invention permet justement de faire en sorte qu'un terminal puisse être mis en relation avec un autre terminal quelque soit le média, le protocole, le langage et le(s) réseau(x) utilisés, comme détaillé plus loin.

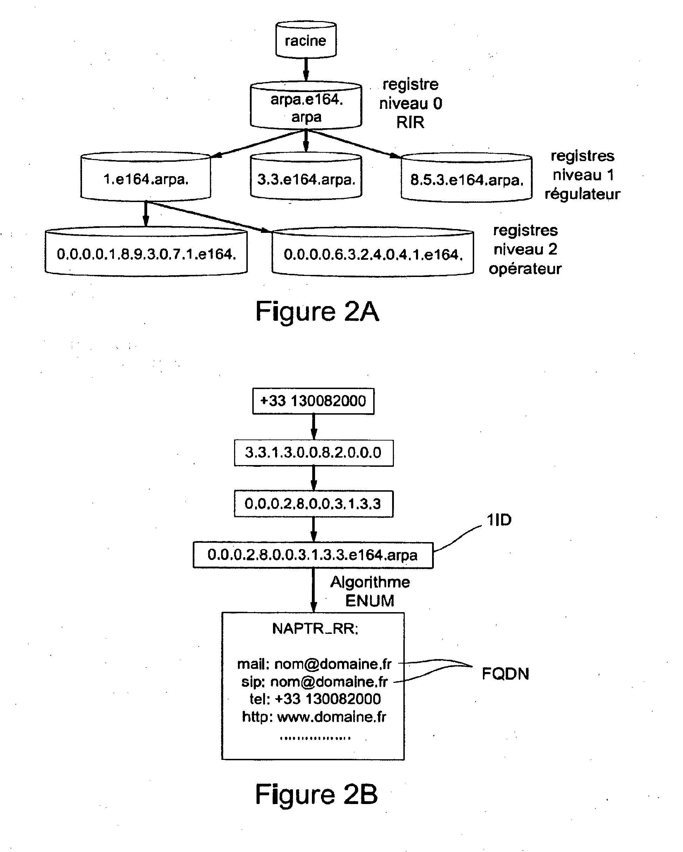

Le système selon la présente invention vise à permettre la gestion de la joignabilité d'au moins un utilisateur, dit appelé (A1), sur au moins un terminal (1) communicant, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant. Le système comporte au moins un serveur (4) de centralisation, accessible via le(s) réseau(x) (RC) de communication et comprenant au moins une base (DB_ENUM) de données, dite centralisée, stockant des données relatives à une pluralité d'appelés (A1), ces données comportant, pour chaque appelé (A1), un identifiant principal, dit numéro unique (1ID), associé à au moins un identifiant (FQDN) de communication. Ce type de serveur (4) de centralisation pourra, de façon connue en soi, être un serveur DNS de type ENUM permettant de délivrer les identifiants de communications d'utilisateurs enregistrés. La figure 2A montre l'organisation hiérarchique de tels serveurs de centralisation, dans l'exemple de la norme ENUM. Ce type de système ENUM est organisé en registres (ou bases de données) hiérarchisés. Une racine renvoie aux registres de niveau 0, qui constituent les «Registres Internet Régionaux » (RIR, pour « Regional Internet Registries » selon la terminologie anglaise). Il existe actuellement quatre RIR : ARIN pour les zones Amérique du Nord - Afrique ; APNIC pour les zones Asie-Pacifique ; LACNIC pour les zones Amériques du Sud - Caraïbes et RIPE NCC pour la zone Europe étendue. Ces registres renvoient aux registres de niveau 1, dit niveau « régulateur » correspondant aux pays de chacune des régions des RIR. Ces registres de niveau 1 renvoient aux registres de niveau 2, dit niveau « opérateur » correspondant aux opérateurs de communication dans chacun des pays. La figure 2B représente schématiquement et succinctement la conversion d'un numéro de téléphone en identifiant principal (« numéro unique ») selon la norme ENUM et l'association de ce numéro unique (1ID) avec une pluralité d'identifiants (FQDN) de communication.

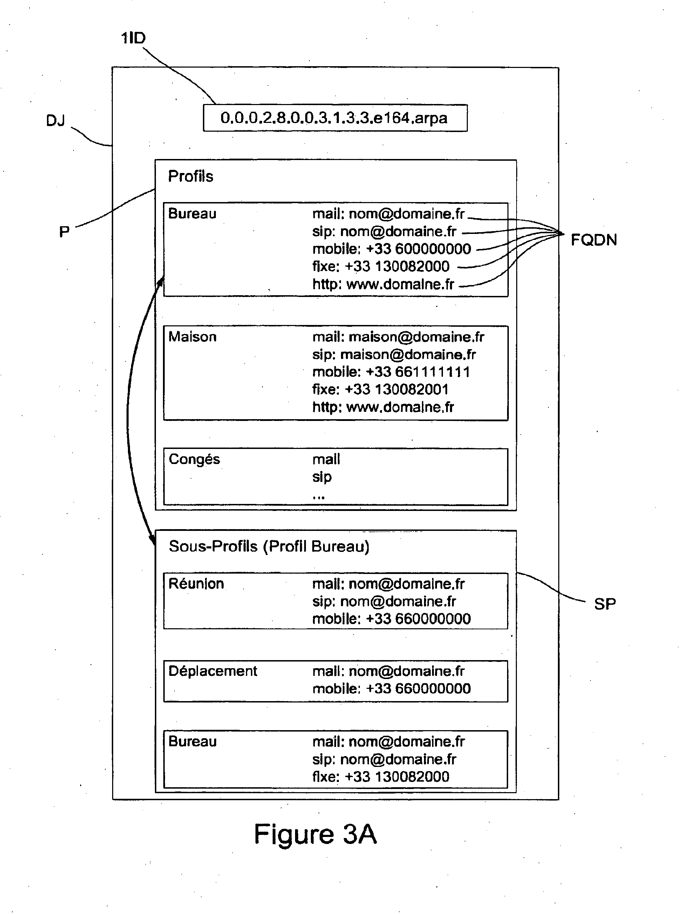

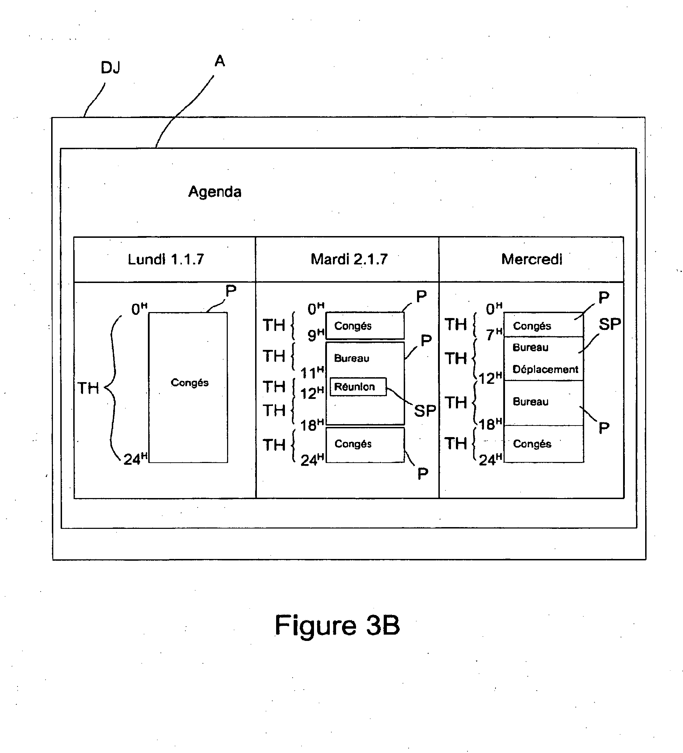

Le système comporte au moins un terminal (1) appelé, comportant des moyens (10) de communication via le(s) réseau(x) (RC) de communication, des moyens (11) de traitement de données, des moyens (12) interactifs pour le contrôle du terminal (1) communicant par l'appelé (A1) et des moyens (13) de mémorisation. Les moyens (12) interactifs pour le contrôle du terminal (1) communicant par l'appelé (A1) pourront bien entendu consister, par exemple, en un clavier (numérique ou alphanumérique) et un écran et/ou un écran tactile. De plus, le système comporte au moins un module (M1) de gestion de la joignabilité implémenté dans les moyens de traitement (11) du terminal (1) appelé, selon les variantes de réalisation décrites ci-après. La présente invention permet d'autres modes de réalisation qui sont décrits en détail dans deux autres demandes déposées par la demanderesse en même temps que la présente demande. Le module (M1) de gestion est spécifique de la présente invention car il est agencé pour, d'une part, contrôler un enregistrement de données, dites données (DJ) de joignabilité permettant aux utilisateurs de gérer leur joignabilité au cours du temps, et pour, d'autre part, mettre à jour le serveur (4) de centralisation, de façon à ce que les données (DJ) de joignabilité conditionnent les données présentes dans le serveur (4) de centralisation. Le module (M1) contrôle donc un enregistrement dans les moyens (13) de mémorisation du terminal (1) appelé, d'au moins certaines données, dites données (DJ) de joignabilité. Ces données (DJ) de joignabilité, représentées schématiquement, à titre d'illustration non limitative sur les figures 3A et 3B, comportent des données, représentatives d'au moins un numéro unique (1ID) et des données représentatives d'identifiants (FQDN) de communication de l'appelé (A1). De façon particulièrement avantageuse, ces données (DJ) de joignabilité pourront comporter des données représentatives d'au moins un profil (P). Ce profil comprend des données représentatives d'identifiants (FQDN) de communication de l'appelé (A1) triés selon un ordre de préférence choisi par l'appelé (A1). Ces données (DJ) de joignabilité pourront également comporter des données représentatives d'au moins un agenda (A) comprenant des données représentatives de tranches horaires (TH) et de paramètres relatifs à l'activation du (ou des) profil(s) (P) pendant les tranches horaires (TH). Les données représentatives de l'ordre de préférence, des tranches horaires (TH) et de l'activation du profil (P) sont déterminées par l'appelé (A1) grâce au(x) module(s) (M1 et/ou M3) de gestion et aux moyens (12) interactifs de son terminal (1) communicant et lui permettent donc de définir les identifiants (FQDN) de communication via lesquels il veut être joint. Le module (M1) de gestion implémenté dans le terminal (1) appelé contrôle également une mise à jour des données stockées dans la base (DB_ENUM) de données centralisée du serveur (4) de centralisation, à partir des données (DJ) de joignabilité enregistrées dans ses moyens (13) de mémorisation. Cette mise à jour a lieu lors d'un changement par l'appelé (A1) d'au moins une des données (DJ) de joignabilité et/ou au cours du temps, lors du passage d'une tranche horaire (TH) à une autre.

Le système comporte également au moins un équipement (5) opérateur comportant des moyens (50) de transmission de données pour l'établissement de communications (COM) via le(s) réseau(x) (RC) de communication. De façon plus spécifique à la présente invention, cet équipement (5) opérateur comporte également des moyens (MR) de redirection de transmission de données et au moins une base de données, dite base de données (DB_U) utilisateurs, stockant des données identifiant les utilisateurs qui possèdent des données (DJ) de joignabilité. Ce type de base de données, pourra consister, à titre d'exemple non limitatif, en une base de données de type HLR (« Home Location Resource », selon la terminologie anglaise) classiquement utilisée dans les réseaux de téléphonie mobile. Les moyens (MR) de redirection consultent cette base de données utilisateurs (DB_U) pour rediriger, au sein du (des) réseau(x) (RC) de communication, les transmissions de données entre le serveur (4) de centralisation et/ou les terminaux (1, 2) du système. Ainsi, en fonction des appelants (A2) requérant une mise en relation avec un appelé, le présent système est capable de gérer vers quel serveur le terminal (2) appelant doit être aiguillé au sein du réseau (RC), pour optimiser la mise en relation des utilisateurs via leurs différents identifiants (FQDN) de communication. Ainsi, cette intégration des moyens (MR) de redirection dans l'équipement (5) opérateur permet qu'un appelé (A1) qui utilise le présent système ait défini les personnes auxquelles il souhaite que ses identifiants (FQDN) soient divulgués, par lesquelles il souhaite être contacté au cours du temps et même, éventuellement, le type d'informations qui peuvent leur être divulguées au cours du temps, en fonction de ses choix enregistrés dans ses données (DJ) de joignabilité. Pour cela, dans un mode de réalisation de l'invention, l'équipement (5) opérateur pourra stocker, par exemple dans la base de données (DB_U) utilisateurs, des données relatives à des paramètres de confidentialité du numéro unique (1ID) et des identifiants (FQDN) de communication des appelés (A1). Ainsi, ces données permettront aux appelés (A1) de définir, auprès de l'équipement (5) opérateur, les appelants (A2) autorisés à obtenir leurs identifiants (FQDN) de communication et/ou leur numéro unique (1ID). Les moyens (MR) de redirection de l'équipement (5) opérateur comporteront alors des moyens (S) d'authentification pour identifier les appelants (A2) accédant au serveur (4) de centralisation pour obtenir les identifiants (FQDN) de communication et/ou le numéro unique (1ID) d'un appelé (A1). Ces moyens (S) d'authentification permettront de limiter l'accès au serveur (4) de centralisation à des appelants (A2) préalablement enregistrés par les appelés (A1) auprès de gestionnaires de l'équipement (5) opérateur. Comme mentionné précédemment, le présent système permet à priori des communications via n'importe quel type de média. Les moyens (50) de transmission de données et/ou les moyens (MR) de redirection de l'équipement (5) opérateur supporteront donc tout type de média de communication, fonctionnant selon au moins un protocole de communication. Ces médias supportés pourront, à titre d'exemples non limitatifs, consister en au moins un média parmi Internet, les messageries électroniques, les messageries électroniques instantanées, la téléphonie, la téléphonie mobile, etc. Comme détaillé ci-après, les moyens (MR) de redirection de l'équipement (5) opérateur, lorsqu'un appelant (A2) requiert l'établissement (70) d'une communication (COM) avec un appelé (A1) via le(s) réseau(x) (RC) de communication, permettent au terminal (2) appelant de consulter la base de données (DB_ENUM) centralisée.

Le module (M1) de gestion appelé contrôle les moyens (10) de communication du terminal (1) appelé pour la mise à jour de la base de données (DB_ENUM) du serveur (4) de centralisation. Le module (M1) de gestion appelé gère les données représentatives des tranches horaires (TH) de façon à ce qu'elles soient modifiables selon les profils (P), pour permettre de choisir les heures d'activation des différents profils (P). Ainsi l'appelé (A1) pourra grâce à son terminal (1) appelé, définir à quelles heures les différents profils qu'il a définis seront activés. Comme représenté sur les figures 3A et 3B, il pourra donc prévoir à l'avance sur quel média il pourra être joint par ses correspondants. De plus, comme également représenté sur les figures 3A et 3B, le module (M1) de gestion appelé gère, pour chaque profil (P), au moins un sous-profil (SP) pour définir différents ordres de préférence des identifiants (FQDN) de communication en fonction de différentes tranches horaires (TH). Ces données représentatives de ces sous-profils (SP) sont, selon différents modes de réalisation, enregistrées dans les moyens (13) de mémorisation du terminal (1) appelé. Pour chaque profil, l'appelé pourra définir des sous-profils lui permettant de choisir ponctuellement les média sur lesquels il veut être joignable, en fonction de son agenda ou de son choix du moment, sans avoir à bouleverser complètement l'organisation de l'un de ses profils (P). Les sous-profils pourront naturellement être activables et désactivables, par exemple de façon à ce que l'appelé soit joignable grâce aux identifiants sélectionnés dans un sous-profil de façon prioritaire par rapport aux identifiants sélectionnés dans le profil dont ce sous-profil dépend lorsque ce dernier est activé, mais que lorsque ce dernier est désactivé, l'appelé soit joignable grâce aux identifiants sélectionnés dans le profil. De plus, pour chaque profil (P) et sous-profil (SP), l'appelé pourra changer les tranches horaires, de façon à ce que la transition entre deux tranches horaires ne soit pas limitée à des heures prédéterminées. L'appelé pourra ainsi gérer précisément l'heure à laquelle se passe cette transition, par exemple à la seconde près. Le module (M1) de gestion appelé gère donc les données représentatives des tranches horaires (TH) de façon à ce qu'elles soient modifiables selon les sous-profils (SP). Enfin, l'appelé pourra planifier à l'avance l'évolution de son agenda et donc des tranches horaires et de son profil. Pour cela, le module (M1) de gestion appelé gère les données représentatives de l'agenda (A) pour organiser les tranches horaires (TH) par jour et/ou par semaine et/ou par mois et/ou par année. Afin de simplifier la gestion de la joignabilité par l'appelé (A1), l'invention prévoit que les données (DJ) soient compatibles avec les données générées par les logiciels d'organisation d'agenda tels que ceux des téléphones portables, ceux des ordinateurs ou ceux des PDA, quel que soit l'éditeur de ce type de logiciel. L'invention prévoit également que si les données ne sont pas compatibles, le module de gestion comporte des moyens d'importation et/ou d'exportation des données représentatives de l'agenda (A) dans les données (DJ) de joignabilité de l'appelé (A1) et/ou des données représentatives d'agenda dans les logiciels de type connu. Ainsi, l'invention permet une synchronisation (ou une combinaison) automatique des agendas entre eux.

Dans les différents modes de réalisation de l'invention, le module (M1) de gestion est implémenté dans le terminal (1) appelé uniquement. Les moyens (11) de traitement du terminal (1) appelé comportent un module (M1) de gestion, appelé module (M1) de gestion appelé, contrôlant l'enregistrement et la sélection des données (DJ) de joignabilité dans les moyens (13) de mémorisation du terminal (1) appelé. Le module (M1) de gestion du terminal (1) appelé génère des données compatibles avec le serveur (4) de centralisation, pour la mise à jour de la base de données (DB_ENUM) du serveur (4) de centralisation à partir des données représentatives des identifiants (FQDN) de communication de l'appelé (A1) et/ou de son numéro unique (1ID), présentes dans les données (DJ) de joignabilité stockées dans les moyens (13) de mémorisation du terminal. Le terminal (1) appelé gère donc tout seul les données (DJ) de joignabilité et la mise à jour de la base de données (DB_ENUM) du serveur (4) de centralisation. Dans les différents modes de réalisation de l'invention, le système comporte également un équipement (5) opérateur permettant d'améliorer les fonctionnalités du système, comme détaillé ci-après. Ces différentes fonctionnalités sont similaires à celles décrites dans les deux autres demandes déposées par la demanderesse en même temps que la présente demande. Une de ces deux demandes décrit un serveur (3) de joignabilité, dont certaines fonctionnalités sont intégrées ici, au moins partiellement, dans l'équipement (5) opérateur.

Dans une variante de réalisation possible, le module (M1) de gestion appelé pourra consister en une application logicielle téléchargeable, par exemple à partir de l'équipement (5) opérateur, par le terminal (1) appelé, telle qu'une applet, un plug-in ou tout autre type d'application destinée à être exécutée au sein d'un environnement logiciel en cours d'exécution sur le terminal (1) appelé. Ainsi, n'importe quel terminal (1) appelé exécutant un environnement logiciel supportant ce type d'application pourra être rendu compatible avec le présent système grâce à l'implémentation d'un module (M1) de gestion appelé dans ses moyens de traitement de données, simplement en se connectant à un serveur l'équipement (5) opérateur et en téléchargeant les données nécessaires à cette implémentation. Dans cette variante de réalisation, les données (DJ) de joignabilité pourront être envoyées au terminal (1) appelé par l'équipement (5) opérateur, par exemple, sous la forme de pages Internet de type html (« hypertext mark-up language », selon la terminologie anglaise) ou xml (« extended mark-up language », selon la terminologie anglaise) qui seront affichées par le terminal (1) appelé qui les recevra, sans que cela ne nécessite de modification particulière. Les données ainsi transmises consisteront, par exemple, en des menus proposant un certain nombre de choix à l'utilisateur pour qu'il définisse ces données (DJ) de joignabilité. Cet exemple de pages Internet est bien entendu utilisé à titre illustratif pour montrer que dans cette variante de réalisation, l'invention pourra être facilement transposable d'un terminal communicant à un autre. La modification et la gestion de ces données (DJ) de joignabilité nécessitera ensuite l'exécution du module (M1) de gestion appelé, notamment pour la mise à jour de la base de données du serveur (4) de centralisation.

Le serveur (4) de centralisation comporte naturellement des moyens (40) de communication, via le(s) réseau(x) (RC) de communication. Ces moyens (40) de communication sont, dans le présent système, agencés, en outre et en particulier, pour la réception de requêtes (NAPTR) d'obtention des identifiants (FQDN) de communication d'un appelé (A1) identifié par son numéro unique (1ID), pour l'envoi d'une réponse comprenant une liste (NAPTR_RR) d'identifiants (FQDN) de communication correspondant au numéro unique (1ID) de l'appelé (A1) et pour la réception de mises à jour de la base de données (DB_ENUM) centralisée à partir de la base de données (DB_JOIN) de joignabilité. D'autre part, le serveur (4) de centralisation comporte des moyens (41) de traitement de données, en outre et en particulier, pour le traitement des requêtes (NAPTR) d'obtention d'identifiants, l'identification du numéro unique (1ID) de l'appelé (A1) et l'élaboration de la réponse comprenant la liste (NAPTR_RR) d'identifiants (FQDN) de communication correspondants. Le serveur (4) de centralisation tel que décrit dans la présente demande peut naturellement constituer un des serveurs de la hiérarchie d'un système d'identifiants uniques, par exemple tel que ceux de la norme ENUM représentés sur les figures 2A et 2B. L'invention prévoit que ce serveur puisse en fait être intégré dans l'équipement (5) opérateur d'un opérateur de communication car il est possible que chacun des opérateurs de communication possède un système d'identifiants uniques, par exemple tel que ceux de la norme ENUM. Dans ce cas, les transmissions de données entre l'équipement (5) opérateur et le serveur (4) de centralisation ne seront plus nécessaires ou auront lieu au sein de cet équipement, c'est-à-dire entre les serveurs et terminaux de l'opérateur de communication. De même, les moyens (MR) de redirection des communications pourront également être implémentés dans d'autres équipements (5') opérateurs que l'équipement (5) opérateur du système, de façon à permettre une interopérabilité entre les différents opérateurs de communication. De plus, dans un mode de réalisation de l'invention, le serveur (4) de centralisation comporte des moyens (S) d'authentification des terminaux (1) appelés dont le module (M1) de gestion met à jour la base de données (DB_ENUM) centralisée, de façon à limiter l'accès à des terminaux (1) appelés préalablement enregistrés auprès de gestionnaires du serveur (4) de centralisation. Ainsi, le système permet d'éviter qu'un utilisateur non autorisé ne modifie les identifiants (FQDN) de communication d'un utilisateur du présent système.

Dans une variante de réalisation de la présente invention, les moyens (MR) de redirection de l'équipement (5) opérateur pourront comporter également des moyens (S) d'authentification pour identifier les appelés (A1) accédant au serveur (4) de centralisation pour mettre à jour la base de données (DB_ENUM) centralisée. Ainsi, le système permet de limiter l'accès au serveur (4) de centralisation à des appelés (A1) préalablement enregistrés auprès de gestionnaires de l'équipement (5) opérateur.

Dans un mode de réalisation de l'invention, les fonctionnalités du présent système sont rendues compatibles également pour les appelants (A2). Ainsi, dans ce mode de réalisation de l'invention, le système comporte également au moins un terminal (2) appelant. Ce terminal (2) appelant comporte naturellement des moyens (20) de communication via le(s) réseau(x) (RC) de communication pour joindre au moins un appelé (A1) sur au moins un terminal (1) appelé, grâce à des requêtes (RT) d'établissement de communication, et communiquer avec ce terminal (1) appelé au travers d'au moins un média de communication. De plus, ces moyens (20) de communication peuvent également être agencés pour envoyer des requêtes (NAPTR) d'obtention des identifiants (FQDN) de communication d'un appelé (A1) vers le serveur (4) de centralisation et pour recevoir des réponses contenant des listes (NAPTR_RR) d'identifiants (FQDN) de communication. De façon plus spécifique à la présente invention, ce terminal (2) appelant pourra comporter également des moyens (21) de traitement de données comportant un module de gestion, dit module (M2) de gestion appelant. Dans une variante de réalisation, ce module (M2) de gestion appelant comporte un lanceur (M20) d'application gérant les moyens (20) de communication pour sélectionner le média correspondant à l'identifiant (FQDN) de communication prioritaire dans une liste (NAPTR_RR) reçue. Cette sélection pourra être réalisée manuellement par l'appelant (A2) sur son terminal(2) appelant, par exemple grâce à des moyens interactifs tels qu'un clavier (numérique ou alphanumérique) et un écran et/ou un écran tactile. Dans une variante de réalisation, cette sélection du média par le lancer (M20) d'application pourra être automatique. Dans cette variante, le lanceur (M20) d'application du module (M2) de gestion appelant, pourra gérer les moyens (20) de communication pour sélectionner les différents média de communication supportés par le terminal (2) appelant. De préférence, le lanceur (M20) d'application tente d'établir une communication via le média correspondant à l'identifiant (FQDN) de communication prioritaire dans la liste (NAPTR_RR) reçue. Cependant, par exemple en cas d'échec de la communication via le média prioritaire, le lanceur (M20) d'application pourra tenter d'établir la communication via un autre média, en effectuant une sélection de média, soit successivement en fonction de la priorité définie d'après la liste des identifiants (FQDN) de communication,soit simultanément en tentant d'établir une communication sur tous les média disponibles en même temps. Au cours de cette sélection automatique, le lanceur (M20) d'application envoie des requêtes d'établissement de communication à l'équipement (5) opérateur et traite la réponse reçue afin d'établir la communication. Dans le cas d'une sélection successive, le lanceur (M20) d'application essaie le média de communication suivant dans la liste de priorité jusqu'à établir une communication, en abandonnant après un nombre déterminé d'itérations infructueuses. Dans le cas d'une sélection simultanée, le lanceur (M20) d'application cesse ses tentatives d'établissement de communication sur les différents média si au moins l'une des communications est établie et abandonne après un nombre déterminé d'itérations infructueuses. De plus, le module (M2) de gestion appelant, pourra également gérer au moins un numéro unique (1ID) et/ou au moins un identifiant (FQDN) de communication, correspondant à au moins un appelé (A1) et mémorisé(s) dans des moyens (23) de mémorisation du terminal (2) appelant. Ce module (M2) de gestion pourra naturellement être en fait le même module (M1) que celui d'un terminal (1) appelé au sens où on l'entend ici, mais requérant l'obtention des identifiants (FQDN) d'un appelé (A1).

Dans un mode de réalisation de l'invention, les données stockées dans la base de données (DB_U) utilisateurs de l'équipement (5) opérateur pourront comporter également des données relatives à des paramètres de confidentialité du numéro unique (1ID) et des identifiants (FQDN) de communication de l'appelé (A1). Ces données permettent aux appelés (A1) de définir, auprès de l'équipement (5) opérateur, les appelants (A2) autorisés à obtenir leurs identifiants (FQDN) de communication et/ou leur numéro unique (1ID). Dans ce mode de réalisation, les moyens (MR) de redirection de l'équipement (5) opérateur comportent des moyens (S) d'authentification pour identifier les appelants (A2) qui accèdent au serveur (4) de centralisation pour obtenir les identifiants (FQDN) de communication et/ou le numéro unique (1ID) d'un appelé (A1). Ainsi, si un terminal (2) appelant requiert l'obtention des identifiants (FQDN) de communication de l'appelé (A1), il sera au préalable identifié par l'équipement (5) opérateur qui, en fonction de ces paramètres de confidentialité, délivrera les informations requises, si l'appelant (A2) et/ou le terminal (2) appelant est identifié (ou sont identifiés) comme étant autorisé(s) à obtenir les identifiants (FQDN) de communication et/ou le numéro unique (1ID) d'un appelé (A1). Ces moyens (S) d'authentification permettent donc de limiter l'accès au serveur (4) de centralisation à des appelants (A2) préalablement enregistrés par les appelés (A1) auprès de gestionnaires de l'équipement (5) opérateur.

Dans un mode de réalisation de l'invention, la base de données (DB_U) utilisateurs de l'équipement (5) opérateur stocke les serveurs de centralisation correspondant à une pluralité d'appelés (A1), par exemple selon une hiérarchie définie dans une norme, Cette base de données est alors consultée par les moyens (MR) de redirection, lorsque des moyens (20) de communication d'au moins un terminal (2) appelant envoient, vers au moins un serveur de centralisation, une requête (NAPTR) d'obtention des identifiants (FQDN) de communication d'un appelé (A1) erronée ou incomplète ou inadaptée au(x) réseau(x) (RC). Cette consultation permet d'identifier, en fonction de l'appelé (A1), le serveur de centralisation vers lequel cette requête (NAPTR) doit être envoyée et de rediriger cette requête (NAPTR) d'obtention des identifiants (FQDN) de communication vers ce serveur identifié. De même, lorsque des moyens (20) de communication d'au moins un terminal (2) appelant envoient une requête (RT) d'établissement d'une communication vers les moyens (50) de transmission de données de l'équipement (5) opérateur, pour joindre au moins un appelé (A1) sur au moins terminal (1) appelé et communiquer avec ce terminal (1) appelé via le(s) réseau(x) (RC) de communication, les moyens (MR) de redirection, après consultation de la base de données, envoient une requête (NAPTR) d'obtention des identifiants (FQDN) de communication d'un appelé (A1) vers le serveur (4) de centralisation, pour consultation de la base de données (DB_ENUM) centralisée. Dans ce mode de réalisation, les moyens (MR) de redirection de l'équipement (5) opérateur sont également agencés pour la réception et/ou le traitement de la réponse contenant la liste (NAPTR_RR) d'identifiants (FQDN) de communication de l'appelé (A1). Ces moyens (MR) de redirection permettront de rediriger la communication (COM) du terminal (2) appelant sur un média correspondant à l'identifiant (FQDN) de communication prioritaire dans le profil (P) activé au cours de la tranche horaire (TH) à laquelle l'appelant (A2) a requis une communication (COM), lorsque le terminal (2) appelant est compatible avec ce média. En revanche, lorsque le terminal (2) appelant utilise un média différent de celui correspondant à cet identifiant (FQDN) de communication prioritaire et que le terminal (2) appelant n'est pas compatible avec ce média, les moyens (MR) de redirection de l'équipement (5) opérateur pourront comporter des moyens (MC) de conversion de média pour convertir les données transmises par le terminal (2) appelant en données compatibles avec ce média. Ces moyens (MC) de conversion de média pourront exécuter au moins une des fonctions suivantes, données à titre d'exemple non limitatif, soit de boîte vocale d'enregistrement de message vocal (VO), soit de reconnaissance vocale pour la conversion d'un message vocal (VO) en texte de message électronique (email) ou de message court (SMS) ou de message multimédia court (MMS), soit de synthèse vocale pour la conversion d'un texte de message électronique (email) ou de message court (SMS) ou de message multimédia court (MMS) en message vocal (VO), soit de convertisseur de message électronique (mail) en message court (SMS) ou réciproquement, soit de convertisseur de message électronique en message multimédia court (MMS) ou réciproquement.

Les différents modes de réalisation du système selon l'invention décrits ici permettent la mise en oeuvre d'un procédé de gestion de la joignabilité d'au moins un utilisateur, dit appelé (A1), sur au moins un terminal (1) communicant, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant. Le mode de réalisation le plus général de ce procédé sera mis en oeuvre par un système comportant au moins un terminal (1) appelé, au moins un serveur (4) de centralisation et au moins un module . (M1) de gestion implémenté dans les moyens de traitement (11) du terminal (1) appelé.

Une première étape principale du procédé selon l'invention consiste en une étape d'enregistrement (80) d'au moins certaines données (DJ) de joignabilité, par le module (M1) de gestion, dans les moyens (13) de mémorisation du terminal (1) appelé. Cette étape (80) d'enregistrement des données (DJ) de joignabilité comporte au moins une étape de modification des tranches horaires (TH) selon les profils (P), de façon à permettre de choisir les heures d'activation des différents profils (P). De plus, dans une variante de réalisation, cette étape d'enregistrement (80) pourra comporter au moins une étape d'enregistrement d'au moins un sous-profil (SP) pour définir différents ordres de préférence des identifiants (FQDN) de communication en fonction de différentes tranches horaires (TH). Cette étape d'enregistrement d'au moins un sous-profil (SP), par le module (M1) de gestion, comporte une étape de modification des tranches horaires (TH) selon les sous-profils (SP). Enfin, l'étape (80) d'enregistrement des données représentatives des tranches horaires (TH), par le module (M1) de gestion dans les moyens (13) de mémorisation du terminal (1) appelé pourra comporter au moins une étape d'organisation des tranches horaires (TH) par jour et/ou par semaine et/ou par mois et/ou par année.

Une seconde étape principale du procédé selon l'invention consiste en une étape de mise à jour (90), par le module (M1) de gestion, des données stockées dans la base (DB_ENUM) de données centralisée du serveur (4) de centralisation, à partir des données (DJ) de joignabilité enregistrées dans les moyens (13) de mémorisation du terminal (1) appelé. Cette étape de mise à jour pourra avoir lieu automatiquement, lors d'un changement par l'appelé (A1) d'au moins une des données (DJ) de joignabilité et/ou au cours du temps, lors du passage d'une tranche horaire (TH) à une autre. Cette étape de mise à jour (90) comporte une étape de transmission (86), via le(s) réseau(x) (RC) de communication, de données représentatives des identifiants (FQDN) de communication de l'appelé (A1) et/ou de son numéro unique (1 ID), par le module (M1) de gestion vers des moyens (40) de communication du serveur (4) de centralisation. Lors du passage automatique d'une tranche horaire (TH) à une autre dans l'agenda (A) stocké sur le terminal (1) appelé, une mise à jour des données (DJ) de joignabilité sera automatiquement envoyée au serveur (4) de centralisation.

Une troisième étape principale du procédé selon l'invention consiste en une consultation (51), par au moins un équipement (5) opérateur, d'au moins une base de données de l'équipement (5) opérateur, dite base de données (DB_U) utilisateurs, stockant des données identifiant les utilisateurs qui possèdent des données (DJ) de joignabilité. Cette étape est mise en oeuvre pour l'établissement (70) de communications (COM) via le(s) réseau(x) (RC) de communication, par des moyens (50) de transmission de données de l'équipement (5) opérateur. Cette étape est suivie d'au moins une étape de redirection (77, 78) de transmissions de données entre le serveur (4) de centralisation et/ou les terminaux (1, 2) du système, par des moyens (MR) de redirection de transmission de données de l'équipement (5) opérateur. Comme expliqué précédemment en référence au système selon l'invention, la consultation de la base de données utilisateurs permet d'identifier si les utilisateurs dont l'équipement (5) opérateur est en train de traiter les transmissions de données possèdent des données (DJ) de joignabilité. En fonction des utilisateurs, l'équipement (5) opérateur peut alors les mettre en relation plus efficacement et éventuellement mettre en oeuvre des fonctionnalités de filtrage des communications ou des données délivrées aux utilisateurs.

Pour l'enregistrement (80) des données (DJ) de joignabilité et/ou la mise à jour (90) de la base de données (DB_ENUM) du serveur (4) de centralisation, le procédé comporte sélection (83) par l'appelé (A1), grâce au module (M1) de gestion appelé contrôlant les moyens (12) interactifs et les moyens (13) de mémorisation de son terminal (1) appelé. Ainsi, l'appelé (A1) sélectionne, parmi les données (DJ) de joignabilité stockées dans les moyens (13) de mémorisation du terminal (1) appelé, les données à mettre à jour dans la base de données (DB_ENUM) centralisée du serveur (4) de centralisation. Ensuite, une étape de création (85), par le module (M1) de gestion appelé, de données compatibles avec le serveur (4) de centralisation, permet la mise à jour (90) de la base de données (DB_ENUM) du serveur (4) de centralisation à partir des données (DJ) de joignabilité.

Dans une variante de réalisation, l'invention prévoit que le procédé comporte une étape déclaration (71) des appelés (A1) auprès de gestionnaires de l'équipement (5) opérateur. Ainsi, lors de la transmission (86) de données pour la mise à jour (90) de la base de données (DB_ENUM) centralisée, le procédé comportera une étape d'authentification (72) du terminal (1) appelé, par des moyens (S) d'authentification de l'équipement (5) opérateur, de façon à identifier les appelés (A1) accédant au serveur (4) de centralisation pour mettre à jour la base de données (DB_ENUM) centralisée, et limiter l'accès au serveur (4) de centralisation à des appelés (A1) préalablement enregistrés. Dans une autre variante, le procédé comporte une étape de déclaration (71 bis) des appelés (A1) auprès de gestionnaires du serveur (4) de centralisation. Ainsi, lors de la transmission (86) de données pour la mise à jour (90) de la base de données (DB_ENUM) centralisée, le procédé comportera une étape d'authentification (72bis) du terminal (1) appelé, par des moyens (S) d'authentification du serveur (4) de centralisation, de façon à limiter l'accès à des appelés (A1) préalablement enregistrés.

D'une manière générale, le procédé selon l'invention est mis en oeuvre lorsqu'un appelant (A2) requiert l'établissement (70) d'une communication (COM) avec un appelé (A1) via le(s) réseau(x) (RC) de communication. C'est pour gérer efficacement l'établissement (70) de cette communication (COM) que les moyens (MR) de redirection et la base de données (DB_U) utilisateurs sont implémentés dans l'équipement (5) opérateur. Lorsqu'un appelant (A2) requiert l'établissement (70) d'une communication (COM) avec un appelé (A1), via le(s) réseau(x) (RC) de communication, des moyens (20) de communication d'au moins un terminal (2) appelant mettent en oeuvre une étape d'envoi (73), via le(s) réseau(x) (RC) de communication, d'une requête (RT) d'établissement d'une communication, pour joindre au moins un appelé (A1) sur au moins un terminal (1) appelé et communiquer avec ce terminal (1) appelé. Dans d'autres cas, lorsqu'un appelant (A2) requiert l'établissement (70) d'une communication (COM) avec un appelé (A1), via le(s) réseau(x) (RC) de communication, des moyens (20) de communication d'au moins un terminal (2) appelant mettent en oeuvre une étape d'envoi (73bis), via le(s) réseau(x) (RC) de communication, d'une requête (NAPTR) d'obtention des identifiants (FQDN) de communication d'un appelé (A1), pour obtenir les identifiants (FQDN) de l'appelé (A1). Cette requête est envoyée pour consultation (96) de la base de données (DB_ENUM) centralisée du serveur (4) de centralisation. Bien entendu, cette étape d'envoi (73bis), par le terminal (2) appelant, d'une requête (NAPTR) d'obtention des identifiants (FQDN) de communication d'un appelé (A1), peut être mise en oeuvre par l'appelant (A2) qui souhaite obtenir les identifiants (FQDN) de communication d'un appelé (A1) même sans requérir d'établissement (70) d'une communication, pour autant que le terminal (2) appelant le permette. Dans le mode de réalisation où le système comporte un terminal (2) appelant comportant un module (M2) de gestion appelant, lorsque l'appelant (A2) requiert l'établissement (70) d'une communication (COM) avec un appelé (A1), cet appelé (A1) est identifié par le module (M2) de gestion appelant, implémenté dans des moyens (21) de traitement de données du terminal (2) appelant, grâce à au moins un numéro unique (1ID) et/ou au moins un identifiant (FQDN) de communication, mémorisé(s) dans des moyens (23) de mémorisation du terminal (2) appelant. De façon connue en soi, l'appelé (A1) peut être identifié par les moyens (21) de traitement de données du terminal (2) appelant, grâce à au moins un numéro unique (1ID) et/ou au moins un identifiant (FQDN) de communication, mémorisé(s) dans des moyens (23) de mémorisation du terminal (2) appelant. Cependant, lorsque le terminal (2) appelant comporte un module (M2) de gestion, celui-ci permet de gérer le numéro unique (1ID) et/ou le(s) identifiant(s) (FQDN) de communication en fonction des réponses reçues du serveur (4) de centralisation. Dans une variante de réalisation de l'invention, l'étape (73) d'envoi de la requête (RT) d'établissement d'une communication s'accompagne de l'étape de consultation (51), par l'équipement (5) opérateur, de la base de données (DB_U) utilisateurs de l'équipement (5) opérateur. Cette consultation (51) permet une étape de redirection (78) de la requête (RT), par les moyens (MR) de redirection de l'équipement (5) opérateur. Cette redirection (78) comporte une étape d'envoi d'une requête (NAPTR) d'obtention des identifiants (FQDN) de communication d'un appelé (A1), vers le serveur (4) de centralisation correspondant à l'appelé, pour consultation (96) de la base de données (DB_ENUM) centralisée.

Lorsque la requête (NAPTR) est adressée de façon erronée ou incomplète ou inadaptée au(x) réseau(x) (RC) lors de l'étape d'envoi (73bis) d'une requête (NAPTR) d'obtention des identifiants (FQDN) de communication d'un appelé (A1), vers au moins un serveur de centralisation, cette étape d'envoi (73bis) s'accompagne d'une étape de consultation (51), par les moyens (MR) de redirection de l'équipement (5) opérateur, de la base de données (DB_U) utilisateurs de l'équipement (5) opérateur stockant les serveurs de centralisation correspondant à une pluralité d'appelés (A1). Cette consultation (51) permet d'identifier, en fonction de l'appelé (A1), le serveur (4) de centralisation vers lequel cette requête (NAPTR) doit être envoyée. Ensuite, les moyens (MR) de redirection de l'équipement (5) opérateur mettent alors en oeuvre une étape de redirection (77) de cette requête (NAPTR) d'obtention des identifiants (FQDN) de communication vers ce serveur identifié, pour consultation (96) de la base de données (DB_ENUM) centralisée de ce serveur (4) de centralisation. Même si cette requête (NAPTR) d'obtention des identifiants est correcte, l'invention prévoit un mode de réalisation dans lequel l'étape d'envoi (73bis) de la requête (NAPTR) d'obtention des identifiants (FQDN) de communication de l'appelé (A1), s'accompagne de l'étape de consultation (51), par l'équipement (5) opérateur, de la base de données (DB_U) utilisateurs de l'équipement (5) opérateur, stockant également des données relatives à des paramètres de confidentialité du numéro unique (1ID) et des identifiants (FQDN) de communication de l'appelé (A1). Ces données permettent aux appelés (A1) de définir, auprès de l'équipement (5) opérateur, les appelants (A2) autorisés à obtenir leurs identifiants (FQDN) de communication et/ou leur numéro unique (1ID). Dans ce mode de réalisation, le procédé comporte une étape d'authentification (72) des appelants (A2) accédant au serveur (4) de centralisation pour obtenir les identifiants (FQDN) de communication et/ou le numéro unique (1ID) d'un appelé (A1), de façon à limiter l'accès au serveur (4) de centralisation à des appelants (A2) préalablement enregistrés par les appelés (A1) au cours d'une étape de déclaration (71) des appelants (A2) auprès de gestionnaires de l'équipement (5) opérateur.

Comme expliqué précédemment, la base de données (DB_U) utilisateurs et les moyens (MR) de redirection de transmission de données peuvent être intégrés dans des équipements (5') opérateurs autres que l'équipement (5) opérateur du présent système. Les étapes de consultation (51) de la base de données (DB_U) utilisateurs et de redirection (77, 78) peuvent alors être mises en oeuvre par des équipements (5') opérateurs autres que l'équipement (5) opérateur du système, de façon à permettre une interopérabilité entre les différents opérateurs de communication.

Le procédé selon l'invention peut comporter une étape de consultation (96) de la base de données (DB_ENUM) centralisée par le terminal (2) appelant. Cette étape s'accompagne d'une étape de réception (91), par des moyens (40) de communication du serveur (4) de centralisation, via le(s) réseau(x) (RC) de communication, de la requête (NAPTR) d'obtention des identifiants (FQDN) de communication d'un appelé (A1) identifié par son numéro unique (1ID). Une étape de traitement (92) de la requête (NAPTR) d'obtention d'identifiants et d'identification du numéro unique (1ID) de l'appelé (A1) dans la base (DB_ENUM) de données centralisée, par les moyens (41) de traitement de données du serveur (4) de centralisation, permet alors une étape d'élaboration (93), par les moyens (41) de traitement de données du serveur (4) de centralisation, d'une réponse comprenant la liste (NAPTR_RR) d'identifiants (FQDN) correspondants. Cette liste (NAPTR_RR) est bien entendu automatiquement limitée en fonction des données (DJ) de joignabilité, grâce à l'étape de mise à jour (90) de la base (DB_ENUM) de données centralisée. Ensuite, les moyens (40) de communication du serveur (4) de centralisation mettent en oeuvre une étape d'envoi (94) de la réponse comprenant une liste (NAPTR_RR) d'identifiants (FQDN) de communication correspondant au numéro unique (1ID) de l'appelé (A1). Selon différents modes de réalisation de l'invention, cette consultation (96) de la base de données (DB_ENUM) centralisée du serveur (4) de centralisation, peut s'accompagner d'une étape de réception (74) par les moyens (20) de communication du terminal (2) appelant, de la réponse contenant la liste (NAPTR_RR) d'identifiants (FQDN) de communication de l'appelé (A1), suivie d'une étape de traitement (75), par le module (M2) de gestion appelant du terminal (2) appelant, de la réponse contenant la liste (NAPTR_RR) d'identifiants (FQDN) de communication de l'appelé (A1). Ce module (M2) permet alors une étape de démarrage (76) d'une communication (COM), par un lanceur (M20) d'application du module (M2) de gestion appelant, gérant les moyens (20) de communication pour sélectionner le média correspondant à l'identifiant (FODN) de communication prioritaire dans la liste (NAPTR_RR) reçue. Cette sélection par le lanceur (M20) d'application du terminal (2) appelant pourra être réalisée, comme expliqué précédemment en référence au système selon l'invention, de manière successive ou simultanée. Dans une autre variante, lorsque la consultation (96) de la base de données (DB_ENUM) centralisée du serveur (4) de centralisation fait suite à une redirection (77, 78) par l'équipement opérateur, elle s'accompagne d'une étape de traitement (97), par les moyens (MR) de redirection de l'équipement (5) opérateur, de la liste (NAPTR_RR) d'identifiants (FQDN) de communication de l'appelé (A1). Ensuite, les moyens (MR) de redirection de l'équipement (5) opérateur permettent une étape de démarrage (98) d'une communication (COM), pour rediriger la communication (COM) sur un média correspondant à l'identifiant (FQDN) de communication prioritaire dans le profil (P) activé au cours de la tranche horaire (TH) à laquelle a lieu la requête (RT) d'établissement d'une communication (COM) par le terminal (2) appelant, lorsque le terminal (2) appelant est compatible avec ce média. Dans une variante de réalisation éventuelle, ce démarrage (98) d'une communication (COM) par redirection de la communication (COM) sur un média approprié pourra, par exemple en cas d'échec de la communication via le média prioritaire, comme expliqué précédemment pour le lanceur (M20) d'application du terminal (2) appelant, être réalisée par une sélection successive ou simultanée des différents média possibles, pour tenter d'établir la communication via un autre média. En revanche, lorsque, d'une part, le terminal (2) appelant, émetteur de la requête (RT) d'établissement d'une communication (COM), utilise un média différent de celui correspondant à l'identifiant (FQDN) de communication prioritaire dans le profil (P) activé au cours de la tranche horaire (TH) à laquelle a lieu la requête (RT) d'établissement d'une communication (COM) par le terminal (2) appelant et, d'autre part, le terminal (2) appelant n'est pas compatible avec ce média, l'étape de démarrage (98) de la communication (COM), par les moyens (MR) de redirection de l'équipement (5) opérateur, comporte une étape de conversion (99) de média, par des moyens (MC) de conversion de média de l'équipement (5) opérateur.

Dans des modes de réalisation possibles, cette étape de conversion (99) pourra consister à exécuter au moins une des fonctions suivantes :
- boîte vocale d'enregistrement de message vocal (VO),
- reconnaissance vocale pour la conversion d'un message vocal (VO) en texte de message électronique (email) ou de message court (SMS) ou de message multimédia court (MMS),
- synthèse vocale pour la conversion d'un texte de message électronique (email) ou de message court (SMS) ou de message multimédia court (MMS) en message vocal (VO),
- convertisseur de message électronique (mail) en message court (SMS) ou réciproquement,
- convertisseur de message électronique en message multimédia court (MMS) ou réciproquement.

On comprend, à la lecture de la présente demande, que la présente invention a atteint les buts qu'elle s'était fixée en proposant différents modes de réalisation supprimant les inconvénients de l'art antérieur. Par exemple, en ce qui concerne l'impossibilité d'émettre des requêtes (NAPTR) directement vers un serveur (4) de centralisation, au travers d'un pare-feu, l'invention permet de contourner le problème en permettant que le terminal (2) appelant envoie une requête (RT) d'établissement d'une communication et que l'équipement (5) opérateur se charge de cette requête (NAPTR) d'obtention des identifiants (FQDN) de communication de l'appelé (A1), lorsqu'un terminal (2) appelant envoie une requête (RT) d'établissement d'une communication (COM). L'équipement opérateur pourra naturellement consulter le serveur (4) de centralisation puisque ses ports ne seront pas limités par un pare-feu.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système de gestion de la joignabilité d'au moins un utilisateur, dit appelé (A1), sur au moins un terminal (1) communicant, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant, le système comportant :
• au moins un serveur (4) de centralisation, accessible via le réseau/les réseaux (RC) de communication et comprenant au moins une base (DB_ENUM) de données, dite centralisée, stockant des données relatives à une pluralité d'appelés (A1), ces données comportant, pour chaque appelé (A1), un identifiant principal, dit numéro unique (1ID), associé à au moins un identifiant (FQDN) de communication,
le système étant **caractérisé en ce qu'**il comporte :
• au moins un terminal (1) appelé, comportant des moyens (10) de communication via le réseau/les réseaux (RC) de communication, des moyens (12) interactifs pour le contrôle du terminal (1) communicant par l'appelé (A1), des moyens (13) de mémorisation et des moyens (11) de traitement de données comportant au moins un module de gestion, dit module (M1) de gestion appelé, contrôlant :
- un enregistrement dans les moyens (13) de mémorisation du terminal (1) appelé, d'au moins certaines données, dites données (DJ) de joignabilité,
- une mise à jour des données stockées dans la base (DB_ENUM) de données centralisée du serveur (4) de centralisation, à partir des données (DJ) de joignabilité enregistrées dans les moyens (13) de mémorisation du terminal (1) appelé, lors d'un changement par l'appelé (A1) d'au moins une des données (DJ) de joignabilité et/ou au cours du temps, lors du passage d'une tranche horaire (TH) à une autre.
• au moins un équipement (5) opérateur comportant des moyens (50) de transmission de données pour l'établissement de communications (COM) via le réseau/les réseaux (RC) de communication avec un terminal appelant, des moyens (MR) de redirection de transmission de données et au moins une base de données, dite base de données (DB_U) utilisateurs, stockant des données identifiant les utilisateurs qui possèdent des données (DJ) de joignabilité, les moyens (MR) de redirection consultant cette base de données utilisateurs (DB_U) pour rediriger, au sein du(des) réseau(x) (RC) de communication, les transmissions de données soit entre le serveur (4) de centralisation et un terminal du système soit entre les terminaux (1, 2) du système.

2. Système selon la revendication 1, **caractérisé en ce que** les moyens (MR) de redirection de l'équipement (5) opérateur comportent des moyens (MC) de conversion de média, activés lorsque, d'une part, le terminal (2) appelant, émetteur de la requête (RT) d'établissement d'une communication (COM), utilise un média différent de celui correspondant à l'identifiant (FQDN) de communication prioritaire dans le profil (P) activé au cours de la tranche horaire (TH) à laquelle a lieu la requête (RT) d'établissement d'une communication (COM) par le terminal (2) appelant et, d'autre part; le terminal (2) appelant n'est pas compatible avec ce média, de façon à convertir les données transmises par le terminal (2) appelant en données compatibles avec ce média.

3. Système selon la revendication 1, **caractérisé en ce que** le module (M1) de gestion appelé génère des données compatibles avec le serveur (4) de centralisation, pour la mise à jour de la base de données (DB_ENUM) du serveur (4) de centralisation à partir de la base de données (DB_JOIN) de joignabilité ces données de joignabilité générées par le module de gestion comprenant parmi des données représentatives d'au moins un numéro unique (1ID), d'au moins un profil (P) comprenant des données représentatives d'identifiants (FQDN) de communication de l'appelé (A1) triés selon un ordre de préférence et d'au moins un agenda (A) comprenant des données représentatives de tranches horaires (TH) et de paramètres relatifs à l'activation du profil/des profils (P) pendant les tranches horaires (TH), les données représentatives de l'ordre de préférence, des tranches horaires (TH) et de l'activation du profil (P) étant déterminées par l'appelé (A1) grâce au module (M1) de gestion et aux moyens (12) interactifs de son terminal (1) communicant.

4. Système selon une des revendications 1 à 3, **caractérisé en ce que** le module (M1) de gestion appelé contrôle les moyens (10) de communication du terminal (1) appelé pour la mise à jour de la base de données (DB_ENUM) du serveur (4) de centralisation.

5. Système selon une des revendications 1 à 4, **caractérisé en ce que** les moyens (MR) de redirection de l'équipement (5) opérateur comportent des moyens (S) d'authentification pour identifier les appelés (A1) accédant au serveur (4) de centralisation pour mettre à jour la base de données (DB_ENUM) centralisée, de façon à limiter l'accès au serveur (4) de centralisation à des appelés (A1) préalablement enregistrés auprès de gestionnaires de l'équipement (5) opérateur.

6. Système selon une des revendications 1 à 5, **caractérisé en ce que** le serveur (4) de centralisation comporte des moyens (S) d'authentification des terminaux (1) appelés dont le module (M1) de gestion met à jour la base de données (DB_ENUM) centralisée, de façon à limiter l'accès à dès terminaux (1) appelés préalablement enregistrés auprès de gestionnaires du serveur (4) de centralisation.

7. Système selon une des revendications 1 à 6, **caractérisé en ce que** le serveur (4) de centralisation est implémenté dans l'équipement (5) opérateur.

8. Système selon une des revendications 1 à 7, **caractérisé en ce que** les moyens (50) de transmission de données et/ou les moyens (MR) de redirection de l'équipement (5) opérateur supportent au moins un média de communication, fonctionnant selon au moins un protocole de communication, le/les média supporté/supportés consistant en au moins un média parmi les suivants :
- Internet,
- messagerie électronique,
- messagerie électronique instantanée,
- téléphonie,
- téléphonie mobile.

9. Système selon une des revendications 1 à 8, **caractérisé en ce que** la base de données (DB_U) utilisateurs de l'équipement (5) opérateur stocke les serveurs de centralisation correspondant à une pluralité d'appelés (A1), cette base de données étant consultée par les moyens (MR) de redirection, lorsque des moyens (20) de communication d'au moins un terminal (2) appelant envoient, vers au moins un serveur de centralisation, une requête (NAPTR) d'obtention des identifiants (FQDN) de communication d'un appelé (A1) erronée ou incomplète ou inadaptée au réseau/aux réseaux (RC), pour identifier, en fonction de l'appelé (A1), le serveur de centralisation vers lequel cette requête (NAPTR) doit être envoyée et pour rediriger cette requête (NAPTR) d'obtention des identifiants (FQDN) de communication vers ce serveur identifié.

10. Système selon une des revendications 1 à 9, **caractérisé en ce que** la base de données (DB_U) utilisateurs de l'équipement (5) opérateur stocke les serveurs de centralisation correspondant à une pluralité d'appelés (A1), cette base de données étant consultée par les moyens (MR) de redirection pour identifier, en fonction de l'appelé (A1), le serveur de centralisation vers lequel une requête (NAPTR) doit être envoyée, lorsque des moyens (20) de communication d'au moins un terminal (2) appelant envoient une requête (RT) d'établissement d'une communication vers les moyens (50) de transmission de données de l'équipement (5) opérateur, pour joindre au moins un appelé (A1) sur au moins un terminal (1) appelé et communiquer avec ce terminal (1) appelé via le réseau/les réseaux (RC) de communication, les moyens (MR) de redirection, après consultation de la base de données, envoyant une requête (NAPTR) d'obtention des identifiants (FQDN) de communication d'un appelé (A1)vers le serveur (4) de centralisation, pour consultation de la base de données (DB_ENUM) centralisée.

11. Système selon une des revendications 9 et 10, **caractérisé en ce que** les moyens (MR) de redirection de l'équipement (5) opérateur sont également agencés pour la réception et/ou le traitement de la réponse contenant la liste (NAPTR_RR) d'identifiants (FQDN) de communication de l'appelé (A1) et, d'autre part, pour rediriger la communication (COM) du terminal (2) appelant sur un média correspondant à l'identifiant (FQDN) de communication prioritaire dans le profil (P) activé au cours de la tranche horaire (TH) à laquelle l'appelant (A2) a requis une communication (COM), lorsque le terminal (2) appelant est compatible avec ce média.

12. Système selon une des revendications 1 à 11, **caractérisé en ce que** les moyens (MR) de redirection des communications sont également implémentés dans d'autres équipements (5') opérateurs que l'équipement (5) opérateur du système, de façon à permettre une interopérabilité entre les différents opérateurs de communication.

13. Système selon une des revendications 1 à 12, **caractérisé en ce que** le serveur (4) de centralisation comporte :
- des moyens (40) de communication, via le réseau/les réseaux (RC) de communication, pour la réception de requêtes (NAPTR) d'obtention des identifiants (FQDN) de communication d'un appelé (A1) identifié par son numéro unique (1ID), pour l'envoi d'une réponse comprenant au moins une liste (NAPTR_RR) d'identifiants (FQDN) de communication correspondant au numéro unique (1ID) de l'appelé (A1) et pour la réception de mises à jour de la base de données (DB_ENUM) centralisée à partir des données (DJ) de joignabilité,
- des moyens (41) de traitement de données pour le traitement des requêtes (NAPTR) d'obtention d'identifiants, l'identification du numéro unique (1ID) de l'appelé (A1) et l'élaboration de la réponse comprenant la liste (NAPTR_RR) d'identifiants (FQDN) correspondants.

14. Système selon une des revendications 1 à 13, **caractérisé en ce qu'**il comporte également au moins un terminal (2) appelant, comportant :
- des moyens (20) de communication via le réseau/les réseaux (RC) de communication pour joindre au moins un appelé (A1) sur au moins un terminal (1) appelé, grâce à des requêtes (RT) d'établissement de communication, et communiquer avec ce terminal (1) appelé au travers d'au moins un média, et/ou pour envoyer des requêtes (NAPTR) d'obtention des identifiants (FQDN) de communication d'un appelé (A1) vers le serveur (4) de centralisation et pour recevoir des réponses contenant des listes (NAPTR_RR) d'identifiants (FQDN) de communication,
- des moyens (21) de traitement de données comportant un module de gestion, dit module (M2) de gestion appelant, comportant un lanceur (M20) d'application gérant les moyens (20) de communication pour sélectionner le média correspondant à l'identifiant (FQDN) de communication prioritaire dans une liste (NAPTR_RR) reçue.

15. Système selon la revendication 14, **caractérisé en ce que** le module (M2) de gestion appelant, gère au moins un numéro unique (1ID) et/ou au moins un identifiant (FQDN) de communication, correspondant à au moins un appelé (A1) et mémorisé/mémorisés dans des moyens (23) de mémorisation du terminal (2) appelant.

16. Système selon une des revendications 1 à 15, **caractérisé en ce que** les données stockées dans la base de données (DB_U) utilisateurs de l'équipement (5) opérateur comportent également des données relatives à des paramètres de confidentialité du numéro unique (1ID) et des identifiants (FQDN) de communication de l'appelé (A1), ces données permettant aux appelés (A1) de définir, auprès de l'équipement (5) opérateur, les appelants (A2) autorisés à obtenir leurs identifiants (FQDN) de communication et/ou leur numéro unique (1ID), les moyens (MR) de redirection de l'équipement (5) opérateur comportant des moyens (S) d'authentification pour identifier les appelants (A2) accédant au serveur (4) de centralisation pour obtenir les identifiants (FQDN) de communication et/ou le numéro unique (1ID) d'un appelé (A1), de façon à limiter l'accès au serveur (4) de centralisation à des appelants (A2) préalablement enregistrés par les appelés (A1) auprès de gestionnaires de l'équipement (5) opérateur.

17. Procédé de gestion de la joignabilité d'au moins un utilisateur, dit appelé (A1), sur au moins un terminal (1) communicant, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant, mis en oeuvre par un système comportant :
- au moins un terminal (1) appelé comportant des moyens (10) de communication via le réseau/les réseaux (RC) de communication, des moyens (12) interactifs pour le contrôle du terminal (1) communicant par l'appelé (A1), des moyens (13) de mémorisation et des moyens (11) de traitement de données comportant au moins un module de gestion de la joignabilité, dit module (M1) de gestion appelé,
- au moins un serveur (4) de centralisation, accessible via le réseau/les réseaux (RC) de communication et comprenant au moins une base (DB_ENUM) de données, dite centralisée, stockant des données relatives à une pluralité d'appelés (A1), ces données comportant, pour chaque appelé (A1), un identifiant principal, dit numéro unique (1ID), associé à au moins un identifiant (FQDN) de communication,
le procédé étant **caractérisé en ce qu'**il comporte les étapes suivantes :
- enregistrement (80), par le module (M1) de gestion appelé, dans les moyens (13) de mémorisation du terminal (1) appelé, d'au moins certaines données, dites données (DJ) de joignabilité, ,
- mise à jour (90), par le module (M1) de gestion, des données stockées dans la base (DB_ENUM) de données centralisée du serveur (4) de centralisation, à partir des données (DJ) de joignabilité enregistrées dans les moyens (13) de mémorisation du terminal (1) appelé, lors d'un changement par l'appelé (A1) d'au moins une des données (DJ) de joignabilité et/ou au cours du temps, lors du passage d'une tranche horaire (TH) à une autre
- consultation (51), par au moins un équipement (5) opérateur, d'au moins une base de données de l'équipement (5) opérateur, dite base de données (DB_U) utilisateurs, stockant des données identifiant les utilisateurs qui possèdent des données (DJ) de joignabilité, suivie d'au moins une étape de redirection (77, 78) de transmissions de données entre le serveur (4) de centralisation et/ou les terminaux (1, 2) du système, par des moyens (MR) de redirection de transmission de données de l'équipement (5) opérateur, pour l'établissement (70) de communications (COM) via le réseau/les réseaux (RC) de communication, par des moyens (50) de transmission de données de l'équipement (5) opérateur.

18. Procédé selon la revendication 17, **caractérisé en ce que** le module (M1) de gestion appelé permet la mise en oeuvre des étapes suivantes :
- sélection (83) par l'appelé (A1), grâce au module (M1) de gestion appelé contrôlant les moyens (12) interactifs et les moyens (13) de mémorisation de son terminal (1) appelé, parmi les données (DJ) de joignabilité stockées dans les moyens (13) de mémorisation du terminal (1) appelé, des données à mettre à jour dans la base de données (DB_ENUM) centralisée du serveur (4) de centralisation,
- création (85), par le module (M1) de gestion appelé, de données compatibles avec le serveur (4) de centralisation, pour la mise à jour (90) de la base de données (DB_ENUM) du serveur (4) de centralisation à partir des données (DJ) de joignabilité, parmi des données représentatives d'au moins un numéro unique (1ID), d'au moins un profil (P) comprenant des données représentatives d'identifiants (FQDN) de communication de l'appelé (A1) triés selon un ordre de préférence et d'au moins un agenda (A) comprenant des données représentatives de tranches horaires (TH) et de paramètres relatifs à l'activation du profil/des profils (P) pendant les tranches horaires (TH), les données représentatives de l'ordre de préférence, des tranches horaires (TH) et de l'activation du profil (P) étant déterminées par l'appelé (A1) grâce au module (M1) de gestion et aux moyens (12) interactifs de son terminal (1) communicant.

19. Procédé selon une des revendications 17 et 18, **caractérisé en ce qu'**il comporte une étape d'implémentation du serveur (4) de centralisation dans l'équipement (5) opérateur.

20. Procédé selon une des revendications 17 à 19, **caractérisé en ce que** l'étape de mise à jour (90) comporte une étape de transmission (86), via le réseau/les réseaux (RC) de communication, de données représentatives des identifiants (FQDN) de communication de l'appelé (A1) et/ou de son numéro unique (1 ID), par le module (M1) de gestion appelé vers des moyens (40) de communication du serveur (4) de centralisation.

21. Procédé selon la revendication 20, **caractérisé en ce que** l'étape de transmission (86) de données pour la mise à jour (90) de la base de données (DB_ENUM) centralisée comporte une étape d'authentification (72bis) du terminal (1) appelé, par des moyens (S) d'authentification du serveur (4) de centralisation, de façon à limiter l'accès à des appelés (A1) préalablement enregistrés auprès de gestionnaires du serveur (4) de centralisation au cours d'une étape préalable de déclaration (71 bis) des appelés (A1).

22. Procédé selon la revendication 20, **caractérisé en ce que** l'étape de transmission (86) de données pour la mise à jour (90) de la base de données (DB_ENUM) centralisée comporte une étape d'authentification (72) du terminal (1) appelé, par des moyens (S) d'authentification de l'équipement (5) opérateur, de façon à identifier les appelés (A1) accédant au serveur (4) de centralisation pour mettre à jour la base de données (DB_ENUM) centralisée, et limiter l'accès au serveur (4) de centralisation à des appelés (A1) préalablement enregistrés au cours d'une étape de déclaration (71) des appelés (A1) auprès de gestionnaires de l'équipement (5) opérateur.

23. Procédé selon une des revendications 17 à 22, **caractérisé en ce que**, lorsqu'un appelant (A2) requiert l'établissement (70) d'une communication (COM) avec un appelé (A1), via le réseau/les réseaux (RC) de communication, des moyens (20) de communication d'au moins un terminal (2) appelant que cet appelant (A2) utilise mettent en oeuvre une étape d'envoi (73), via le réseau/les réseaux (RC) de communication, vers au moins un équipement opérateur, d'une requête (RT) d'établissement d'une communication, pour joindre au moins un appelé (A1) sur au moins un terminal (1) appelé et communiquer avec ce terminal (1) appelé.

24. Procédé selon la revendication 23, **caractérisé en ce que** l'étape (73) d'envoi de la requête (RT) d'établissement d'une communication s'accompagne de l'étape de consultation (51), par l'équipement (5) opérateur, de la base de données (DB_U) utilisateurs de l'équipement (5) opérateur, puis d'une étape de redirection (78), par les moyens (MR) de redirection de l'équipement (5) opérateur, cette redirection (78) comportant une étape d'envoi d'une requête (NAPTR) d'obtention des identifiants (FQDN) de communication d'un appelé (A1), vers le serveur (4) de centralisation correspondant à l'appelé, pour consultation (96) de la base de données (DB_ENUM) centralisée de ce serveur (4) de centralisation.

25. Procédé selon une des revendications 17 à 22, **caractérisé en ce que**, lorsqu'un appelant (A2) requiert l'établissement (70) d'une communication (COM) avec un appelé (A1), via le réseau/les réseaux (RC) de communication, des moyens (20) de communication d'au moins un terminal (2) appelant que cet appelant (A2) utilise mettent en oeuvre une étape d'envoi (73bis), via le réseau/les réseaux (RC) de communication, vers au moins un serveur (4) de centralisation, d'une requête (NAPTR) d'obtention des identifiants (FQDN) de communication d'un appelé (A1), pour obtenir les identifiants (FQDN) de l'appelé (A1), pour consultation (96) de la base de données (DB_ENUM) centralisée de ce serveur (4) de centralisation.

26. Procédé selon la revendication 25, **caractérisé en ce que** l'étape d'envoi (73bis) d'une requête (NAPTR) d'obtention des identifiants (FQDN) de communication d'un appelé (A1), vers au moins un serveur de centralisation, s'accompagne, lorsque cette requête (NAPTR) est adressée de façon erronée ou incomplète ou inadaptée au réseau/aux réseaux (RC), d'une étape de consultation (51), par les moyens (MR) de redirection de l'équipement (5) opérateur, de la base de données (DB_U) utilisateurs de l'équipement (5) opérateur stockant les serveurs de centralisation correspondant à une pluralité d'appelés (A1), pour identifier, en fonction de l'appelé (A1), le serveur (4) de centralisation vers lequel cette requête (NAPTR) doit être envoyée, puis d'une étape de redirection (77), par les moyens (MR) de redirection de l'équipement (5) opérateur, de cette requête (NAPTR) d'obtention des identifiants (FQDN) de communication vers ce serveur identifié, pour consultation (96) de la base de données (DB_ENUM) centralisée de ce serveur (4) de centralisation.

27. Procédé selon une des revendications 25 et 26, **caractérisé en ce que** l'étape d'envoi (73bis) de la requête (NAPTR) d'obtention des identifiants (FQDN) de communication de l'appelé (A1), s'accompagne de l'étape de consultation (51), par l'équipement (5) opérateur, de la base de données (DB_U) utilisateurs de l'équipement (5) opérateur, stockant également des données relatives à des paramètres de confidentialité du numéro unique (1ID) et des identifiants (FQDN) de communication de l'appelé (A1), ces données permettant aux appelés (A1) de définir, auprès de l'équipement (5) opérateur, les appelants (A2) autorisés à obtenir leurs identifiants (FQDN) de communication et/ou leur numéro unique (1ID), le procédé comportant une étape d'authentification (72) des appelants (A2) accédant au serveur (4) de centralisation pour obtenir les identifiants (FQDN) de communication et/ou le numéro unique (1 ID) d'un appelé (A1), de façon à limiter l'accès au serveur (4) de centralisation à des appelants (A2) préalablement enregistrés par les appelés (A1) au cours d'une étape de déclaration (71) des appelants (A2) auprès de gestionnaires de l'équipement (5) opérateur.

28. Procédé selon une des revendications 17 à 27, **caractérisé en ce que** les étapes de consultation (51) de la base de données (DB_U) utilisateurs et de redirection (77, 78) sont mises en oeuvre par des équipements (5') opérateurs autres que l'équipement (5) opérateur du système et comportant au moins une base de données (DB_U) utilisateurs et des moyens (MR) de redirection de transmission de données, de façon à permettre une interopérabilité entre les différents opérateurs de communication.

29. Procédé selon une des revendications 24 à 28, **caractérisé en ce que** l'étape de consultation (96) de la base de données (DB_ENUM) centralisée du serveur (4) de centralisation s'accompagne des étapes suivantes :
- réception (91), par des moyens (40) de communication du serveur (4) de centralisation, via le réseau/les réseaux (RC) de communication, de la requête (NAPTR) d'obtention des identifiants (FQDN) de communication d'un appelé (A1) identifié par son numéro unique (1ID),
- traitement (92) de la requête (NAPTR) d'obtention d'identifiants et identification du numéro unique (1 ID) de l'appelé (A1) dans la base (DB_ENUM) de données centralisée, par des moyens (41) de traitement de données du serveur (4) de centralisation,
- élaboration (93) d'une réponse comprenant la liste (NAPTR_RR) d'identifiants (FQDN) correspondants, cette liste (NAPTR_RR) étant automatiquement limitée en fonction des données (DJ) de joignabilité, grâce à l'étape de mise à jour (90) de la base (DB_ENUM) de données centralisée,
- envoi (94), par les moyens (40) de communication du serveur (4) de centralisation, de la réponse comprenant une liste (NAPTR_RR) d'identifiants (FQDN) de communication correspondant au numéro unique (1ID) de l'appelé (A1).

30. Procédé selon une des revendications 24 à 29, **caractérisé en ce que** l'étape de consultation (96) de la base de données (DB_ENUM) centralisée du serveur (4) de centralisation, s'accompagne des étapes suivantes :
- réception (74) par les moyens (20) de communication du terminal (2) appelant, de la réponse contenant la liste (NAPTR_RR) d'identifiants (FQDN) de communication de l'appelé (A1),
- traitement (75), par le module (M2) de gestion appelant du terminal (2) appelant, de la réponse contenant la liste (NAPTR_RR) d'identifiants (FQDN) de communication de l'appelé (A1) et démarrage (76) d'une communication (COM), par un lanceur (M20) d'application du module (M2) de gestion appelant, gérant les moyens (20) de communication pour sélectionner le média correspondant à l'identifiant (FQDN) de communication prioritaire dans la liste (NAPTR_RR) reçue.

31. Procédé selon la revendication 30, **caractérisé en ce que** lorsque l'appelant (A2) requiert l'établissement (70) d'une communication (COM) avec un appelé (A1), cet appelé (A1) étant identifié par le module (M2) de gestion appelant, implémenté dans des moyens (21) de traitement de données du terminal (2) appelant, grâce à au moins un numéro unique (1 ID) et/ou au moins un identifiant (FQDN) de communication, mémorisé/mémorisés dans des moyens (23) de mémorisation du terminal (2) appelant.

32. Procédé selon une des revendications 24 à 31, **caractérisé en ce que** l'étape de consultation (96) de la base de données (DB_ENUM) centralisée du serveur (4) de centralisation, suite à une redirection (77, 78) par l'équipement opérateur, s'accompagne des étapes suivantes :
- traitement (97), par les moyens (MR) de redirection de l'équipement (5) opérateur, de la liste (NAPTR_RR) d'identifiants (FQDN) de communication de l'appelé (A1),
- démarrage (98) d'une communication (COM), par les moyens (MR) de redirection de l'équipement (5) opérateur, pour rediriger la communication (COM) sur un média correspondant à l'identifiant (FQDN) de communication prioritaire dans le profil (P) activé au cours de la tranche horaire (TH) à laquelle a lieu la requête (RT) d'établissement d'une communication (COM) par le terminal (2) appelant, lorsque le terminal (2) appelant est compatible avec ce média

33. Procédé selon la revendication 32, **caractérisé en ce que** l'étape de démarrage (98) de la communication (COM), par les moyens (MR) de redirection de l'équipement (5) opérateur, comporte une étape de conversion (99), par des moyens (MC) de conversion de média de l'équipement (5) opérateur, activés lorsque, d'une part, le terminal (2) appelant, émetteur de la requête (RT) d'établissement d'une communication (COM), utilise un média différent de celui correspondant à l'identifiant (FQDN) de communication prioritaire dans le profil (P) activé au cours de la tranche horaire (TH) à laquelle a lieu la requête (RT) d'établissement d'une communication (COM) par le terminal (2) appelant et, d'autre part, le terminal (2) appelant n'est pas compatible avec ce média, cette étape de conversion (99) consistant à convertir les données transmises par le terminal (2) appelant en données compatibles avec ce média.

## Patentansprüche

1. System zum Verwalten der Erreichbarkeit mindestens eines Benutzers, genannt Angerufener (A1), auf mindestens einem kommunizierenden Endgerät (1), genannt angerufenes Endgerät (1), mittels mindestens eines Kommunikationsnetzwerks (RC), für die Erreichbarkeit des Angerufenen (A1) durch mindestens einen Benutzer, genannt Anrufer (A2), auf mindestens einem kommunizierenden Endgerät (2), genannt Anrufendes Endgerät (2), wobei das System aufweist:
• mindestens einen Zentralisierserver (4), auf den mittels des Kommunikationsnetzwerks/der Kommunikationsnetzwerke (RC) zugegriffen werden kann, und der mindestens eine Datenbank (DB_ENUM), genannt zentralisiert, aufweist, die Daten bezüglich einer Mehrzahl von Angerufenen (A1) speichert, wobei die Daten, für jeden Angerufenen (A1), einen Hauptidentifikator, genannt eindeutige Zahl (1ID), aufweist, der mindestens einer Kommunikationsidentifikation (FQDN) zugeordnet ist,
wobei das System dadurch charakterisiert ist, dass es aufweist:
• mindestens ein angerufenes Endgerät (1), das Mittel (10) zur Kommunikation über das Kommunikationsnetzwerk/die Kommunikationsnetzwerke (RC), interaktive Mittel (12) zur Steuerung des kommunizierenden Endgeräts (1) durch den Angerufenen (A1), Speichermittel (13) und Mittel (11) zum Verarbeiten von Daten aufweist, die mindestens ein Verwaltungsmodul, genannt angerufenes Verwaltungsmodul (M1), aufweisen, steuernd:
- ein Speichern in den Speichermitteln (13) des angerufenen Endgeräts (1) mindestens gewisser Daten, genannt Erreichbarkeitsdaten (DJ),
- ein Aktualisieren der in der zentralisierten Datenbank (DB_ENUM) des Zentralisierservers (4) gespeicherten Daten ausgehend von den in den Speichermitteln (13) des angerufenen Endgeräts (1) gespeicherten Erreichbarkeitsdaten (DJ) bei einer Änderung durch den Angerufenen (A1) mindestens eines Datums der Erreichbarkeitsdaten (DJ) und/oder im Laufe der Zeit beim Übergang von einem Zeitfenster (TH) zu einem anderen.
• mindestens eine Betreibereinrichtung (5), die Mittel (50) zum Übertragen von Daten für den Aufbau einer Kommunikation (COM) über das Kommunikationsnetzwerk/die Kommunikationsnetzwerke (RC) mit einem angerufenen Endgerät, Mittel (MR) zum Umleiten der Datenübertragung und mindestens eine Datenbank, genannt Benutzerdatenbank (DB_U), aufweist, die Daten speichert, die die Benutzer identifizieren, die Erreichbarkeitsdaten (DJ) besitzen, wobei die Mittel (MR) zum Umleiten diese Benutzerdatenbank (DB_U) zum Umleiten der Datenübertragung innerhalb des Kommunikationsnetzwerks/der Kommunikationsnetzwerke (RC), entweder zwischen dem Zentralisierserver (4) und einem Endgerät des Systems oder zwischen den Endgeräten (1, 2) des Systems, konsultieren.

2. System gemäß Anspruch 1,
dadurch charakterisiert, dass die Mittel (MR) zum Umleiten der Betreibereinrichtung (5) Medienumwandlungsmittel (MC) aufweisen, die aktiviert werden, wenn einerseits das anrufende Endgerät (2), Sender der Anforderung (RT) nach dem Aufbau einer Kommunikation (COM), ein Medium verwendet, das unterschiedlich ist von dem, das der Prioritätskommunikationsidentifikation (FQDN) in dem Profil (P) entspricht, das im Laufe des Zeitfensters (TH), in dem die Anforderung (RT) nach dem Aufbau einer Kommunikation (COM) durch das anrufende Endgerät (2) stattgefunden hat, aktiviert wurde, und andererseits das anrufende Endgerät (2) nicht mit diesem Medium kompatibel ist, in der Art, dass die von dem anrufenden Endgerät (2) übertragenden Daten in mit diesem Medium kompatible Daten umgewandelt werden.

3. System gemäß Anspruch 1, dadurch charakterisiert, dass das angerufene Verwaltungsmodul (M1) mit dem Zentralisierserver (4) kompatible Daten verwaltet zum Aktualisieren der Datenbank (DB_ENUM) des Zentralisierservers (4) ausgehend von der Erreichbarkeitsdatenbank (DB_JOIN), wobei diese von dem Verwaltungsmodul erzeugten Erreichbarkeitsdaten enthalten sind in repräsentativen Daten mindestens einer eindeutigen Zahl (1ID), mindestens eines Profils (P), das repräsentative Daten für Kommunikationsidentifikatoren (FQDN) des Angerufenen (A1), ausgelesen gemäß einem Präferenzbefehl aufweist, und mindestens einer Agenda (A), die repräsentative Daten für die Zeitschlitze (TH) und Parameter bezüglich der Aktivierung des Profils/der Profile (P) während der Zeitschlitze (TH) aufweist, wobei die repräsentativen Daten der Präferenzreihenfolge, der Zeitschlitze (TH) und der Aktivierung des Profils (P), durch den Angerufenen (A) mittels des Verwaltungsmoduls (M1) und interaktiven Mitteln (12) seines kommunizierenden Endgeräts (1) festgelegt werden.

4. System gemäß einem der Ansprüche 1 bis 3, dadurch charakterisiert, dass das angerufene Verwaltungsmodul (M1) die Mittel (10) zur Kommunikation des angerufenen Endgeräts (1) zum Aktualisieren der Datenbank (DB_ENUM) des Zentralisierservers (4) steuert.

5. System gemäß einem der Ansprüche 1 bis 4, dadurch charakterisiert, dass die Mittel (MR) zum Umleiten der Betreibereinrichtung (5) Authentifizierungsmittel (S) zum Identifizieren der Angerufenen (A1), die zum Aktualisieren der zentralisierten Datenbank (DB_ENUM) auf den Zentralisierserver (4) zugreifen, aufweisen, in der Art, dass der Zugriff auf den Zentralisierserver (4) auf die Angerufenen (A1) beschränkt wird, die vorab bei Managern der Betreibereinrichtung (5) registriert wurden.

6. System gemäß einem der Ansprüche 1 bis 5, dadurch charakterisiert, dass der Zentralisierserver (4) Mittel (S) zur Authentifizierung der angerufenen Endgeräte (1) aufweist, deren Verwaltungsmodul (M1) die zentralisierte Datenbank (DB_ENUM) aktualisiert, in der Art, dass der Zugriff auf die angerufenen Endgeräte (1) beschränkt wird, die vorab bei Managern des Zentralisierservers (4) registriert wurden.

7. System gemäß einem der Ansprüche 1 bis 6, dadurch charakterisiert, dass der Zentralisierserver (4) in der Betreibereinrichtung (5) implementiert ist.

8. System gemäß einem der Ansprüche 1 bis 7, dadurch charakterisiert, dass die Mittel (50) zum Übertragen von Daten und/oder die Mittel (MR) zum Umleiten der Betreibereinrichtung (5) mindestens ein Kommunikationsmedium unterstützen, das gemäß einem Kommunikationsprotokoll arbeitet, wobei das unterstütze Medium/die unterstützten Medien aus mindestens einem der folgenden Medien bestehen:
- Internet,
- elektronische Post,
- elektronische Sofortnachrichten,
- Telefonie,
- Mobiltelefonie.

9. System gemäß einem der Ansprüche 1 bis 8, dadurch charakterisiert, dass die Benutzerdatenbank (DB_U) der Betreibereinrichtung (5) die Zentralisierserver, die einer Mehrzahl von Angerufenen (A1) entsprechen, speichert, wobei diese Datenbank von den Mitteln (MR) zur Weiterleitung konsultiert wird, wenn die Mittel (20) zur Kommunikation mindestens eines angerufenen Endgeräts (2) über mindestens einen Zentralisierserver eine Anfrage (NAPTR) zum Erhalt von Kommunikationsidentifikationen (FQDN) eines Angerufenen (A1) an das Netzwerk/die Netzwerke (RC) schickt, die fehlerhaft oder nicht vollständig oder ungeeignet ist, zum Identifizieren, abhängig vom Angerufenen (A1), des Zentralisierservers, an den diese Anfrage (NAPTR) geschickt werden muss, und zum Umleiten dieser Anfrage (NAPTR) zum Erhalt von Kommunikationsidentifikationen (FQDN) an den identifizierten Server.

10. System gemäß einem der Ansprüche 1 bis 9, dadurch charakterisiert, dass die Benutzerdatenbank (DB_U) der Betreibereinrichtung (5) die Zentralisierserver, die einer Mehrzahl von Angerufenen (A1) entsprechen, speichert, wobei diese Datenbank von den Mitteln (MR) zur Weiterleitung konsultiert wird zum Identifizieren, abhängig vom Angerufenen (A1), des Zentralisierservers, an den einen Anfrage (NAPTR) gesendet werden muss, wenn die Mittel (20) zur Kommunikation mindestens eines anrufenden Endgeräts (2) eine Anforderung (RT) zum Aufbau einer Kommunikation an die Mittel (50) zum Übertragen von Daten der Betreibereinrichtung (5) schicken, zum Verbinden mindestens eines Angerufenen (A1) an mindestens einem angerufenen Endgerät (1) und Kommunizieren mit diesem angerufenen Endgerät (1) über das Kommunikationsnetzwerk/die Kommunikationsnetzwerke (RC), wobei die Weiterleitungsmittel (MR) nach Konsultierung der Datenbank eine Anfrage (NAPTR) zum Erhalt von Kommunikationsidentifikationen (FQDN) eines Angerufenen (A1) an den Zentralisierserver (4) zum Konsultieren der zentralisierten Datenbank (DB_ENUM) schicken.

11. System gemäß einem der Ansprüche 9 und 10, dadurch charakterisiert, dass die Mittel (MR) zum Umleiten der Betreibereinrichtung (5) auch eingerichtet sind zum Empfang und/oder der Verarbeitung der Antwort, die die Liste (NAPTR_RR) der Kommunikationsidentifikationen (FQDN) des Angerufenen (A1) enthält, und, andererseits zum Umleiten der Kommunikation (COM) des anrufenden Endgeräts (2) auf ein Medium eingerichtet sind, das der Prioritätskommunikationsidentifikation (FQDN) in dem Profil (P) das im Laufe des Zeitfensters (TH) entspricht, in dem der Anrufer (A2) eine Kommunikation (COM) angefordert hat, aktiviert wurde, wenn das anrufende Endgerät (2) kompatibel mit diesem Medium ist.

12. System gemäß einem der Ansprüche 1 bis 11, dadurch charakterisiert, dass
die Mittel (MR) zum Umleiten von Kommunikationen auch in anderen Betreibereinrichtungen (5') als der Betreibereinrichtung (5) des Systems implementiert sind, in der Art, dass eine Interoperabilität zwischen den unterschiedlichen Kommunikationsbetreibern ermöglicht wird.

13. System gemäß einem der Ansprüche 1 bis 12, dadurch charakterisiert, dass der Zentralisierserver (4) aufweist:
- Mittel (40) zur Kommunikation über das Kommunikationsnetzwerk/die Kommunikationsnetzwerke (RC) zum Empfang von Anfragen (NAPTR) zum Erhalt von Kommunikationsidentifikationen (FQDN) eines durch deine eindeutige Zahl (1ID) identifizierten Angerufenen (A1), zum Senden einer Antwort, die mindestens eine Liste (NAPTR_RR) von Kommunikationsidentifikationen (FQDN), die der eindeutigen Zahl (1ID) des Angerufenen (A1) entsprechen, aufweist, und zum Empfang von Aktualisierungen der zentralisierten Datenbank (DB_ENUM) ausgehend von den Erreichbarkeitsdaten (DJ),
- Mittel (41) zur Verarbeitung von Daten für die Verarbeitung der Anfragen (NAPTR) zum Erhalt von Identifikationen, zur Identifikation der eindeutigen Zahl (1ID) des Angerufenen (A1) und zur Ausarbeitung der Antwort, die die Liste (NAPTR_RR) von entsprechenden Identifikationen (FQDN) enthält.

14. System gemäß einem der Ansprüche 1 bis 13, dadurch charakterisiert, dass
es auch mindestens ein angerufenes Endgerät (2) aufweist, das aufweist:
- Mittel (20) zur Kommunikation über das Kommunikationsnetzwerk/die Kommunikationsnetzwerke (RC) zum Verbinden mindestens eines Angerufenen (A1) an mindestens einem angerufenen Endgerät (1), mittels Anforderungen (RT) zum Kommunikationsaufbau und Kommunizieren mit dem angerufenen Endgerät (1) über mindestens ein Medium und/oder zum Schicken von Anfragen (NAPTR) zum Erhalt von Kommunikationsidentifikationen (FQDN) eines Angerufenen (A1) an den Zentralisierserver (4) und zum Empfang von Antworten, die Listen (NAPTR_RR) von Kommunikationsidentifikationen (FQDN) enthalten,
- Mittel (21) zum Verarbeiten von Daten, die ein Verwaltungsmodul, genannt anrufendes Verwaltungsmodul (M2), aufweisen, aufweisend einen Applikationsstarter (M20), der die Mittel (20) zum Kommunizieren zum Auswählen des Mediums, das der Prioritätskommunikationsidentifikation (FQDN) in einer empfangenen Liste (NAPTR_RR) entspricht, verwaltet.

15. System gemäß Anspruch 14, dadurch charakterisiert, dass das anrufende Verwaltungsmodul (M2) mindestens eine eindeutige Zahl (1ID) und/oder mindestens eine Kommunikationsidentifikation (FQDN) verwaltet, die mindestens einem Angerufenen (A1) entspricht/entsprechen und in den Mitteln (23) zum Speichern des anrufenden Endgeräts (2) gespeichert ist/sind.

16. System gemäß einem der Ansprüche 1 bis 15, dadurch charakterisiert, dass die in der Benutzerdatenbank (DB_U) gespeicherten Daten der Betreibereinrichtung auch Daten bezüglich Vertraulichkeitsparametern der eindeutigen Zahl (1ID) und Kommunikationsidentifikatoren (FQDN) des Angerufenen (A1) aufweist, wobei diese Daten es Angerufenen (A1) ermöglichen, bei der Betreibereinrichtung (5) die Anrufer (A2) zu definieren, die dazu autorisiert sind, ihre Kommunikationsidentifikationen (FQDN) und/oder ihre eindeutige Zahl (1ID) zu erhalten, wobei die Mittel (MR) zum Umleiten der Betreibereinrichtung (5) Authentifizierungsmittel (S) zum Identifizieren der Anrufer (A2) aufweist, die auf den Zentralisierserver (4) zum Erhalten der Kommunikationsidentifikationen (FQDN) und/oder der eindeutigen Zahl (1ID) eines Angerufenen (A1) zugreifen, in der Art, dass der Zugriff auf den Zentralisierserver (4) auf die Anrufer (A2) beschränkt wird, die vorab durch die Angerufenen (A1) bei Managern der Betreibereinrichtung (5) registriert wurden.

17. Verfahren zum Verwalten der Erreichbarkeit mindestens eines Benutzers, genannt Angerufener (A1), auf mindestens einem kommunizierenden Endgerät (1), genannt angerufenes Endgerät (1), mittels mindestens eines Kommunikationsnetzwerks (RC) für die Erreichbarkeit des Angerufenen (A1) durch mindestens einen Benutzer, genannt Anrufer (A2), auf mindestens einem kommunizierenden Endgerät (2), genannt anrufendes Endgerät (2), durchgeführt durch ein System, das aufweist:
- mindestens ein angerufenes Endgerät (1), das Mittel (10) zur Kommunikation über das Kommunikationsnetzwerk/die Kommunikationsnetzwerke (RC), interaktive Mittel (12) zur Steuerung des kommunizierenden Endgeräts (1) durch den Angerufenen (A1), Speichermittel (13) und Mittel (11) zum Verarbeiten von Daten aufweist, die mindestens ein Erreichbarkeitsverwaltungsmodul, genannt angerufenes Verwaltungsmodul (M1), aufweisen,
- mindestens einen Zentralisierserver (4), auf den über das (die) Kommunikationsnetzwerk(e) (RC) zugegriffen werden kann, und der mindestens eine Datenbank (DB_ENUM), genannt zentralisiert, aufweist, die Daten bezüglich einer Mehrzahl von Angerufenen (A1) speichert, wobei diese Daten, für jeden Angerufenen (A1), einen Hauptidentifikator, genannt eindeutige Zahl (1ID), aufweist, der mindestens einer Kommunikationsidentifikation (FQDN) zugeordnet ist,
wobei das Verfahren dadurch charakterisiert ist, dass es die folgenden Schritte aufweist:
- Speichern (80), durch das angerufene Verwaltungsmodul (M1), in den Speichermitteln (13) des angerufenen Endgeräts (1) mindestens gewisser Daten, genannt Erreichbarkeitsdaten (DJ),
- Aktualisieren (90), durch das Verwaltungsmodul (M1), der in der zentralisierten Datenbank (DB_ENUM) des Zentralisierservers (4) gespeicherten Daten ausgehend von den in den Speichermitteln (13) des angerufenen Endgeräts (1) gespeicherten Erreichbarkeitsdaten (DJ) bei einer Änderung durch den Angerufenen (A1) mindestens eines Datums der Erreichbarkeitsdaten (DJ) und/oder im Laufe der Zeit beim Übergang von einem Zeitfenster (TH) zu einem anderen.
• Konsultieren (51), durch mindestens eine Betreibereinrichtung (5), mindestens einer Datenbank der Betreibereinrichtung (5), genannt Benutzerdatenbank (DB_U), die Daten speichert, die die Benutzer identifizieren, die Erreichbarkeitsdaten (DJ) besitzen, gefolgt von einem Schritt des Umleitens (77, 78) von Datenübertragungen zwischen dem Zentralisierserver (4) und/oder den Endgeräten (1, 2) des Systems durch Mittel (MR) zum Umleiten der Übertragung von Daten der Betreibereinrichtung (5) zum Aufbau (70) von Kommunikationen (COM) über das Kommunikationsnetzwerk/die Kommunikationsnetzwerke (RC) durch die Mittel (50) zum Übertragen von Daten der Betreibereinrichtung (5).

18. Verfahren gemäß Anspruch 17, dadurch charakterisiert, dass das angerufene Verwaltungsmodul (M1) es ermöglicht, die folgenden Schritte durchzuführen:
- Auswahl (83), durch den Angerufenen (A1) mittels des angerufenen Verwaltungsmoduls (M1), das die interaktiven Mittel (12) und die Speichermittel (13) seines angerufenen Endgeräts (1) steuert, unter den in den Speichermitteln (13) des angerufenen Endgeräts (1) gespeicherten Erreichbarkeitsdaten (DJ), Daten zum Aktualisieren der zentralisierten Datenbank (DB_ENUM) des Zentralisierservers (4),
- Erzeugung (85), durch das angerufene Verwaltungsmodul (M1) von mit dem Zentralisierserver (4) kompatiblen Daten zur Aktualisierung (90) der Datenbank (DB_ENUM) des Zentralisierservers (4) ausgehend von den Erreichbarkeitsdaten (DJ) unter Daten, repräsentativ für mindestens eine eindeutige Zahl (1ID), mindestens ein Profil (P), das repräsentative Daten für Kommunikationsidentifikatoren (FQDN) des Angerufenen (A1), ausgelesen gemäß einem Präferenzbefehl aufweist, und mindestens eine Agenda (A), die repräsentative Daten für die Zeitschlitze (TH) und Parameter bezüglich der Aktivierung des Profils/der Profile (P) während der Zeitschlitze (TH) aufweist, wobei die Daten repräsentative für die Präferenzreihenfolge, die Zeitschlitze (TH) und die Aktivierung des Profils (P), durch den Angerufenen (A) mittels des Verwaltungsmoduls (M1) und interaktiven Mitteln (12) seines kommunizierenden Endgeräts (1) festgelegt werden.

19. Verfahren gemäß einem der Ansprüche 17 und 18, dadurch charakterisiert, dass es einen Schritt der Implementierung des Zentralisierservers (4) in der Betreibereinrichtung (5) aufweist.

20. Verfahren gemäß einem der Ansprüche 17 bis 19, dadurch charakterisiert, dass der Schritt des Aktualisierens (90) einen Schritt des Übertragens (86) von Daten repräsentativ für Kommunikationsidentifikationen (FQDN) des Angerufenen (A1) und/oder seiner eindeutigen Zahl (1ID) durch das angerufene Verwaltungsmodul (M1) mittels des Kommunikationsnetzwerks/der Kommunikationsnetzwerke (RC) an Mittel (40) zur Kommunikation des Zentralisierservers (40) aufweist.

21. Verfahren gemäß Anspruch 20, dadurch charakterisiert, dass der Schritt der Übertragung (86) der Daten zum Aktualisieren (90) der zentralisierten Datenbank (DB_ENUM), einen der Schritt der Authentifizierung (72bis) des angerufenen Endgeräts durch Authentifizierungsmittel (S) des Zentralisierservers aufweist, in der Art, dass der Zugriff auf den Zentralisierserver (4) auf die Angerufenen (A1) beschränkt wird, die vorab bei Managern der des Zentralisierservers (4) im Laufe eines vorhergehenden Schritts (71 bis) zur Deklarierung der Angerufenen (A1) registriert wurden.

22. Verfahren gemäß Anspruch 20, dadurch charakterisiert, dass der Schritt der Übertragung (86) der Daten zum Aktualisieren (90) der zentralisierten Datenbank (DB_ENUM), einen Schritt der Authentifizierung (72) des angerufenen Endgeräts durch Authentifizierungsmittel (S) der Betreibereinrichtung aufweist, in der Art, dass die Angerufenen (A1), die auf den Zentralisierserver (4) zum Aktualisieren der zentralisierten Datenbank (DB_ENUM) zugreifen, identifiziert werden und der Zugriff auf den Zentralisierserver (4) auf Angerufene (A1) beschränkt wird, die vorab bei Managern der der Betreibereinrichtung (5) im Lauf eines Schritts (71) zur Deklarierung der Angerufenen (A1) registriert wurden.

23. Verfahren gemäß einem der Ansprüche 17 bis 22, dadurch charakterisiert, dass
wenn ein Anrufer den Aufbau einer Kommunikation (COM) mit einem Angerufenen über das Kommunikationsnetzwerk/die Kommunikationsnetzwerke (RC) anfordert, die Mittel (20) zur Kommunikation mindestens eines anrufenden Endgeräts (2), das dieser Anrufer (A2) verwendet, einen Schritt zum Übertragen über das Kommunikationsnetzwerk/die Kommunikationsnetzwerke (RC) an mindestens eine Betreibereinrichtung eine Anforderung (RT) zum Aufbau einer Kommunikation zum Verbinden mindestens eines Angerufenen (A1) an mindestens einem angerufenen Endgerät (1) und Kommunizieren mit diesem angerufenen Endgerät (1) durchführen.

24. Verfahren gemäß Anspruch 23, dadurch charakterisiert, dass der Schritt (73) zum Übertragen der Anforderung (RT) zum Aufbau einer Kommunikation mit dem Schritt der Konsultation (51) durch die Betreibereinrichtung (5) die Benutzerdatenbank (DB_U) der Betreibereinrichtung (5) einhergeht, gefolgt von einem Schritt der Weiterleitung (78), durch die Mittel (MR) zur Weiterleitung der Betreibereinrichtung (5), wobei diese Weiterleitung (78) eine Anfrage (NAPTR) zum Erhalt von Kommunikationsidentifikationen (FQDN) eines Angerufenen (A1) an den den Angerufenen entsprechenden Zentralisierserver (4) aufweist, zum Konsultieren (96) der zentralisierten Datenbank (DB_ENUM) dieses Zentralisierservers (4).

25. Verfahren gemäß einem der Ansprüche 17 bis 22, dadurch charakterisiert, dass wenn ein Anrufer (A2) den Aufbau (70) einer Kommunikation (COM) mit einem Angerufenen (A1) über das Kommunikationsnetzwerk/die Kommunikationsnetzwerke (RC) anfordert, Mittel (20) zur Kommunikation mindestens eines anrufenden Endgeräts (2), das dieser Anrufer (A2) verwendet, einen Schritt zum Übertragen über das Kommunikationsnetzwerk/die Kommunikationsnetzwerke (RC) an mindestens einen Zentralisierserver (4) einer Anfrage (NAPTR) zum Erhalt von Kommunikationsidentifikationen (FQDN) eines Angerufenen (A1) zum Erhalten der Kommunikationsidentifikationen (FQDN) des Angerufenen (A1) zum Konsultieren (96) der zentralisierten Datenbank (DB_ENUM) dieses Zentralisierservers (4) durchführen.

26. Verfahren gemäß Anspruch 25, dadurch charakterisiert, dass der Schritt zum Übertragen (73bis) einer Anforderung (RT) zum Erhalt von Kommunikationsidentifikationen eines Angerufenen (A1) an mindestens einen Zentralisierserver mit einhergeht, wenn diese Anforderung (NAPTR) auf fehlerhafte oder unvollständige oder ungeeignete Weise an das Kommunikationsnetzwerk/die Kommunikationsnetzwerke adressiert ist, mit einem Schritt der Konsultierung (51), durch die Mittel (MR) zur Weiterleitung der Betreibereinrichtung, der Benutzerdatenbank (DB_U) der Betreibereinrichtung, die die Zentralisierserver, die einer Mehrzahl von Angerufenen (A1) entsprechen, zum Identifizieren, als Funktion des Angerufenen (A1), des Zentralisierservers, an den diese Anfrage (NAPTR) geschickt werden muss, gefolgt von einem Schritt zur Weiterleitung (77), durch die Mittel (MR) zur Weiterleitung der Betreibereinrichtung (5), dieser Anforderung (NAPTR) zum Erhalt von Kommunikationsidentifikationen (FQDN) an den identifizierten Server zum Konsultieren (96) der zentralisierten Datenbank (DB_ENUM) dieses Zentralisierservers (4).

27. Verfahren gemäß einem der Ansprüche 25 und 26, dadurch charakterisiert, dass der Schritt zum Übertragen (73bis) der Anforderung (NAPTR) zum Erhalt von Kommunikationsidentifikationen (FQDN) des Angerufenen, mit dem Schritt der Konsultation (51), durch die Betreibereinrichtung (51), der Benutzerdatenbank (DB_U) einhergeht, die auch Daten bezüglich Vertraulichkeitsparametern der eindeutigen Zahl und Kommunikationsidentifikationen (FQDN) des Angerufenen (A1) speichert, wobei es diese Daten den Angerufenen (1) ermöglicht, bei der Betreibereinrichtung (5) die Anrufer zu definieren, die dazu autorisiert sind, ihre Kommunikationsidentifikationen (FQDN) und/oder ihre eindeutige Zahl zu erhalten, wobei das Verfahren einen Authentifizierungsschritt (72) der Anrufer (A2) aufweist, die auf den Zentralisierserver zum Erhalten der Kommunikationsidentifikationen (FQDN) und/oder der eindeutigen Zahl (1ID) eines Angerufenen (A1) zugreifen, in der Art, dass der Zugriff auf den Zentralisierserver (4) auf die Anrufer (A2) beschränkt wird, die vorab durch die Angerufenen (A1) bei Managern der Betreibereinrichtung (5) registriert wurden.

28. Verfahren gemäß einem der Ansprüche 17 bis 27, dadurch charakterisiert, dass die Schritte der Konsultierung (51) der Benutzerdatenbank (DB_U) und der Weiterleitung (77, 78) durch andere Betreibereinrichtungen (5') als die Betreibereinrichtung des Systems durchgeführt werden, die mindestens eine Benutzerdatenbank (DB_U) und Mittel (MR) zur Weiterleitung der Übertragung von Daten aufweisen, in der Art, dass eine Interoperabilität zwischen den unterschiedlichen Kommunikationsbetreibern ermöglicht wird.

29. Verfahren gemäß einem der Ansprüche 24 bis 28, dadurch charakterisiert, dass der Konsultierschritt (96) der zentralisierten Datenbank (DB_ENUM) des Zentralisierservers mit den folgenden Schritten einhergeht:
- Empfang (91), durch die Mittel (40) zur Kommunikation des Zentralisierservers (4), über das Kommunikationsnetzwerk/die Kommunikationsnetzwerke (RC) der Anforderung (NAPTR) zum Erhalt der Kommunikationsidentifikationen eines durch seine eindeutige Zahl identifizierten Angerufenen,
- Verarbeitung (92) der Anforderung (NAPTR) zum Erhalt von Kommunikationsidentifikationen der eindeutigen Zahl (1ID) des Angerufenen (A1) in der zentralisierten Datenbank (DB_ENUM) durch Mittel (41) der Verarbeitung von Daten des Zentralisierservers (4),
- Ausarbeitung (93) einer Antwort aufweisend die Liste (NAPTR_RR) der entsprechenden Kommunikationsidentifikationen (FQDN), wobei die Liste (NAPTR_RR) automatisch abhängig von den Erreichbarkeitsdaten (DJ) begrenzt wird mittels des Aktualisierungsschritts (90) der zentralisierten Datenbank (DB_ENUM),
- Übertragung (94) durch die Mittel (40) zu Kommunikation des Zentralisierservers (4) der Antwort mit der Liste (NAPTR_RR) der Kommunikationsidentifikationen (FQDN) entsprechend der eindeutigen Zahl (1ID) des Angerufenen (A1).

30. Verfahren gemäß einem der Ansprüche 24 bis 29, dadurch charakterisiert, dass der Schritt der Konsultierung (96) der zentralisierten Datenbank (DB_ENUM) des Zentralisierservers (4) mit den folgenden Schritten einhergeht:
- Empfang (74) durch die Mittel (20) zur Kommunikation des anrufenden Endgeräts (2) der Antwort mit der Liste (NAPTR_RR) der Kommunikationsidentifikationen (FQDN) des Angerufenen (A1),
- Verarbeitung (75), durch das anrufende Verwaltungsmodul (M2) des anrufenden Endgeräts der Antwort mit der Liste (NAPTR_RR) der Kommunikationsidentifikationen (FQDN) des Angerufenen (A1) und Start (76) einer Kommunikation (COM) durch einen Applikationsstarter (M20) des anrufenden Verwaltungsmoduls (M2), der die Mittel (20) zur Kommunikation zum Auswählen des Mediums, das der Prioritätskommunikationsidentifikation (FQDN) in der empfangen Liste (NAPTR_RR) entspricht, verwaltet.

31. Verfahren gemäß Anspruch 30, dadurch charakterisiert, dass wenn der Anrufer (A2) den Aufbau (70) einer Kommunikation (COM) mit einem Angerufenen (A1) anfordert, dieser Angerufene (A1) von dem anrufenden Verwaltungsmodul (M2), das in den Datenverarbeitungsmitteln (21) des anrufenden Endgeräts (2) implementiert ist, mittels mindestens einer eindeutigen Zahl (1ID) und/oder mindestens einer Kommunikationsidentifikation (FQDN), die in den Speichermitteln (23) des anrufenden Endgeräts (2) gespeichert ist/sind, identifiziert wird.

32. Verfahren gemäß einem der Ansprüche 24 bis 31, dadurch charakterisiert, dass der Schritt der Konsultierung (96) der zentralisierten Datenbank des Zentralisierservers (4) im Anschluss an eine Weiterleitung (77, 78) durch die Betreibereinrichtung, mit den folgenden Schritten einhergeht:
- Verarbeitung (97), durch die Mittel (MR) zum Umleiten der Betreibereinrichtung (5), der Liste (NAPTR_RR) mit Kommunikationsidentifikatoren (FQDN) des Angerufenen (A1),
- Start (98) einer Kommunikation (COM) durch die Mittel (MR) zum Umleiten der Betreibereinrichtung (5) zum Umleiten der Kommunikation (COM) auf ein Medium, das der Prioritätskommunikationsidentifikation (FQDN) in dem Profil (P) entspricht, das im Laufe des Zeitfensters (TH), in dem die Anforderung (RT) nach dem Aufbau einer Kommunikation (COM) durch das anrufende Endgerät (2) stattgefunden hat, aktiviert wurde, wenn das anrufende Endgerät (2) mit diesem Medium kompatibel ist.

33. Verfahren gemäß Anspruch 32, dadurch charakterisiert, dass der Schritt des Starts (98) der Kommunikation (COM) durch die Mittel (MR) zur Umleitung der Betreibereinrichtung (5) einen Umwandlungsschritt (99) durch die Mittel (MC) zum Umwandeln des Mediums der Betreibereinrichtung (5) aufweist, der aktiviert wird, wenn einerseits das anrufende Endgerät (2), Sender der Anforderung (RT) nach dem Aufbau einer Kommunikation (COM), ein Medium verwendet, das unterschiedlich ist von dem, das der Prioritätskommunikationsidentifikation (FQDN) in dem Profil (P) entspricht, das im Laufe des Zeitfensters (TH), in dem die Anforderung (RT) nach dem Aufbau einer Kommunikation (COM) durch das anrufende Endgerät (2) stattgefunden hat, aktiviert wurde, und andererseits das anrufende Endgerät (2) nicht mit diesem Medium kompatibel ist, wobei dieser Umwandlungsschritt (99) darin besteht, dass die von dem anrufenden Endgerät (2) übertragenden Daten in mit diesem Medium kompatiblen Daten umgewandelt werden.

## Claims

1. System for managing the reachability of at least one user, referred to as the called party (A1), on at least one communicating terminal (1), referred to as the called terminal (1), via at least one communication network (RC), for the reachability of the called party (A1) by at least one user, referred to as the calling party (A2), on at least one communicating terminal (2), referred to as the calling terminal (2), the system comprising:
• at least one centralization server (4), accessible via the communication network/networks (RC) and comprising at least one, so-called centralized, database (DB_ENUM) storing data relating to a plurality of called parties (A1), these data comprising, for each called party (A1), a main identifier, referred to as the unique number (1ID), associated with at least one communication identifier (FQDN),
the system being **characterized in that** it comprises:
• at least one called terminal (1), comprising means (10) of communication via the communication network/networks (RC), interactive means (12) for the control of the communicating terminal (1) by the called party (A1), means (13) of storage and means (11) for processing data comprising at least one management module, referred to as the called management module (M1), controlling:
- a recording in the means (13) of storage of the called terminal (1), of at least certain data, referred to as reachability data (DJ),
- an update of the data stored in the centralized database (DB_ENUM) of the centralization server (4), with the help of the reachability data (DJ) recorded in the means (13) of storage of the called terminal (1), upon a change by the called party (A1) of at least one of the reachability data (DJ) and/or in the course of time, when passing from one time slot (TH) to another,
• at least one operator apparatus (5) comprising means (50) for data transmission for the establishment of communications (COM) via the communication network/networks (RC) with a calling terminal, data transmission redirection means (MR) and at least one database, referred to as the user database (DB_U), storing data identifying the users who possess reachability data (DJ), the redirection means (MR) consulting this user database (DB_U) so as to redirect, within the communication network/networks (RC), the transmissions of data either between the centralization server (4) and a terminal of the system or between the terminals (1, 2) of the system.

2. System according to Claim 1, **characterized in that** the means (MR) of redirection of the operator apparatus (5) comprise media conversion means (MC), activated when, on the one hand, the calling terminal (2), sending the request (RT) for establishment of a communication (COM), uses a different medium from that corresponding to the priority communication identifier (FQDN) in the profile (P) activated in the course of the time slot (TH) in which the request (RT) for establishment of a communication (COM) by the calling terminal (2) takes place and, on the other hand, the calling terminal (2) is not compatible with this medium, so as to convert the data transmitted by the calling terminal (2) into data compatible with this medium.

3. System according to Claim 1, **characterized in that** the called management module (M1) generates data compatible with the centralization server (4), for the updating of the database (DB_ENUM) of the centralization server (4) with the help of the reachability database (DB_REACH) these reachability data generated by the management module comprising from among data representative of at least one unique number (1ID), of at least one profile (P) comprising data representative of communication identifiers (FQDN) of the called party (A1) sorted according to an order of preference and of at least one schedule (A) comprising data representative of time slots (TH) and of parameters relating to the activation of the profile/ profiles (P) during the time slots (TH), the data representative of the order of preference, of the time slots (TH) and of the activation of the profile (P) being determined by the called party (A1) by virtue of the management module (M1) and of the interactive means (12) of its communicating terminal (1).

4. System according to one of Claims 1 to 3, **characterized in that** the called management module (M1) controls the communication means (10) of the called terminal (1) for the updating of the database (DB_ENUM) of the centralization server (4).

5. System according to one of Claims 1 to 4, **characterized in that** the means (MR) of redirection of the operator apparatus (5) comprise authentication means (S) to identify the called parties (A1) accessing the centralization server (4) to update the centralized database (DB_ENUM), in such a way as to limit access to the centralization server (4) to called parties (A1) previously registered with managers of the operator apparatus (5).

6. System according to one of Claims 1 to 5, **characterized in that** the centralization server (4) comprises means (S) for authentication of the called terminals (1) whose management module (M1) updates the centralized database (DB_ENUM), in such a way as to limit access to called terminals (1) previously registered with managers of the centralization server (4).

7. System according to one of Claims 1 to 6, **characterized in that** the centralization server (4) is implemented in the operator apparatus (5).

8. System according to one of Claims 1 to 7, **characterized in that** the means (50) for data transmission and/or the means (MR) of redirection of the operator apparatus (5) support at least one communication medium, operating according to at least one communication protocol, the supported medium/media consisting of at least one medium from among the following:
- Internet,
- electronic messaging,
- instant electronic messaging,
- telephony,
- mobile telephony.

9. System according to one of Claims 1 to 8, **characterized in that** the user database (DB_U) of the operator apparatus (5) stores the centralization servers corresponding to a plurality of called parties (A1), this database being consulted by the redirection means (MR), when communication means (20) of at least one calling terminal (2) dispatch, to at least one centralization server, an erroneous or incomplete request (NAPTR) for obtaining the communication identifiers (FQDN) of a called party (A1) or a request which is not suited to the network/networks (RC), so as to identify, as a function of the called party (A1), the centralization server to which this request (NAPTR) must be dispatched and to redirect this request (NAPTR) for obtaining the communication identifiers (FQDN) to this identified server.

10. System according to one of Claims 1 to 9, **characterized in that** the user database (DB_U) of the operator apparatus (5) stores the centralization servers corresponding to a plurality of called parties (A1), this database being consulted by the redirection means (MR) so as to identify, as a function of the called party (A1), the centralization server to which a request (NAPTR) must be dispatched, when communication means (20) of at least one calling terminal (2) dispatch a request (RT) for establishment of a communication to the means (50) for data transmission of the operator apparatus (5), so as to reach at least one called party (A1) on at least one called terminal (1) and to communicate with this called terminal (1) via the communication network/networks (RC), the redirection means (MR), after consultation of the database, dispatching a request (NAPTR) for obtaining the communication identifiers (FQDN) of a called party (A1) to the centralization server (4), for consultation of the centralized database (DB_ENUM).

11. System according to one of Claims 9 and 10, **characterized in that** the means (MR) of redirection of the operator apparatus (5) are also devised for the reception and/or the processing of the response containing the list (NAPTR_RR) of communication identifiers (FQDN) of the called party (A1) and, on the other hand, for redirecting the communication (COM) of the calling terminal (2) onto a medium corresponding to the priority communication identifier (FQDN) in the profile (P) activated in the course of the time slot (TH) in which the calling party (A2) has requested a communication (COM), when the calling terminal (2) is compatible with this medium.

12. System according to one of Claims 1 to 11, **characterized in that** the means (MR) of redirection of the communications are also implemented in other operator apparatuses (5') than the operator apparatus (5) of the system, so as to allow interoperability between the various communication operators.

13. System according to one of Claims 1 to 12, **characterized in that** the centralization server (4) comprises:
- means (40) of communication, via the communication network/networks (RC), for the reception of requests (NAPTR) for obtaining the communication identifiers (FQDN) of a called party (A1) identified by its unique number (1ID), for the dispatching of a response comprising at least one list (NAPTR_RR) of communication identifiers (FQDN) corresponding to the unique number (1ID) of the called party (A1) and for the reception of updates of the centralized database (DB_ENUM) with the help of the reachability data (DJ),
- means (41) for processing data for the processing of the requests (NAPTR) for obtaining identifiers, the identification of the unique number (1ID) of the called party (A1) and the formulation of the response comprising the list (NAPTR_RR) of corresponding identifiers (FQDN).

14. System according to one of Claims 1 to 13, **characterized in that** it also comprises at least one calling terminal (2), comprising:
- means (20) of communication via the communication network/networks (RC) so as to reach at least one called party (A1) on at least one called terminal (1), by virtue of communication establishment requests (RT), and to communicate with this called terminal (1) through at least one medium, and/or to dispatch requests (NAPTR) for obtaining the communication identifiers (FQDN) of a called party (A1) to the centralization server (4) and to receive responses containing lists (NAPTR_RR) of communication identifiers (FQDN),
- means (21) for processing data comprising a management module, referred to as the calling management module (M2), comprising an application launcher (M20) managing the communication means (20) so as to select the medium corresponding to the priority communication identifier (FQDN) in a list (NAPTR_RR) received.

15. System according to Claim 14, **characterized in that** the calling management module (M2), manages at least one unique number (1ID) and/or at least one communication identifier (FQDN), corresponding to at least one called party (A1) and which is (are) stored in means (23) of storage of the calling terminal (2).

16. System according to one of Claims 1 to 15, **characterized in that** the data stored in the user database (DB_U) of the operator apparatus (5) also comprise data relating to confidentiality parameters of the unique number (1ID) and communication identifiers (FQDN) of the called party (A1), these data allowing the called parties (A1) to define, at the operator apparatus (5), the calling parties (A2) authorized to obtain their communication identifiers (FQDN) and/or their unique number (1ID), the means (MR) of redirection of the operator apparatus (5) comprising authentication means (S) to identify the calling parties (A2) accessing the centralization server (4) to obtain the communication identifiers (FQDN) and/or the unique number (1ID) of a called party (A1), in such a way as to limit access to the centralization server (4) to calling parties (A2) previously recorded by the called parties (A1) with managers of the operator apparatus (5).

17. Method for managing the reachability of at least one user, referred to as the called party (A1), on at least one communicating terminal (1), referred to as the called terminal (1), via at least one communication network (RC), for the reachability of the called party (A1) by at least one user, referred to as the calling party (A2), on at least one communicating terminal (2), referred to as the calling terminal (2), implemented by a system comprising:
- at least one called terminal (1) comprising means (10) of communication via the communication network/networks (RC), interactive means (12) for the control of the communicating terminal (1) by the called party (A1), means (13) of storage and means (11) for processing data comprising at least one module for managing the reachability, referred to as the called management module (M1),
- at least one centralization server (4), accessible via the communication network/networks (RC) and comprising at least one, so-called centralized, database (DB_ENUM) storing data relating to a plurality of called parties (A1), these data comprising, for each called party (A1), a main identifier, referred to as the unique number (1ID), associated with at least one communication identifier (FQDN),
the method being **characterized in that** it comprises the following steps:
- recording (80), by the called management module (M1), in the means (13) of storage of the called terminal (1), of at least certain data, referred to as reachability data (DJ),
- updating (90), by the management module (M1), of the data stored in the centralized database (DB_ENUM) of the centralization server (4), with the help of the reachability data (DJ) recorded in the means (13) of storage of the called terminal (1), upon a change by the called party (A1) of at least one of the reachability data (DJ) and/or in the course of time, when passing from one time slot (TH) to another
- consultation (51), by at least one operator apparatus (5), of at least one database of the operator apparatus (5), referred to as the user database (DB_U), storing data identifying the users who possess reachability data (DJ), followed by at least one step of redirection (77, 78) of transmissions of data between the centralization server (4) and/or the terminals (1, 2) of the system, by means (MR) of redirection of data transmission of the operator apparatus (5), for the establishment (70) of communications (COM) via the communication network/networks (RC), by means (50) for data transmission of the operator apparatus (5).

18. Method according to Claim 17, **characterized in that** the called management module (M1) allows the implementation of the following steps:
- selection (83) by the called party (A1), by virtue of the called management module (M1) controlling the interactive means (12) and the means (13) of storage of its called terminal (1), from among the reachability data (DJ) stored in the means (13) of storage of the called terminal (1), of the data to be updated in the centralized database (DB_ENUM) of the centralization server (4),
- creation (85), by the called management module (M1), of data compatible with the centralization server (4), for the updating (90) of the database (DB_ENUM) of the centralization server (4) with the help of the reachability data (DJ), from among data representative of at least one unique number (1ID), of at least one profile (P) comprising data representative of communication identifiers (FQDN) of the called party (A1) sorted according to an order of preference and of at least one schedule (A) comprising data representative of time slots (TH) and of parameters relating to the activation of the profile/ profiles (P) during the time slots (TH), the data representative of the order of preference, of the time slots (TH) and of the activation of the profile (P) being determined by the called party (A1) by virtue of the management module (M1) and of the interactive means (12) of its communicating terminal (1).

19. Method according to one of Claims 17 and 18, **characterized in that** it comprises a step of implementing the centralization server (4) in the operator apparatus (5).

20. Method according to one of Claims 17 to 19, **characterized in that** the updating step (90) comprises a step of transmission (86), via the communication network/networks (RC), of data representative of the communication identifiers (FQDN) of the called party (A1) and/or of its unique number (1ID), by the called management module (M1) to communication means (40) of the centralization server (4).

21. Method according to Claim 20, **characterized in that** the step of transmission (86) of data for the updating (90) of the centralized database (DB_ENUM) comprises a step of authentication (72bis) of the called terminal (1), by means (S) for authentication of the centralization server (4), in such a way as to limit access to called parties (A1) previously registered with managers of the centralization server (4) in the course of a prior step of declaration (71 bis) of the called parties (A1).

22. Method according to Claim 20, **characterized in that** the step of transmission (86) of data for the updating (90) of the centralized database (DB_ENUM) comprises a step of authentication (72) of the called terminal (1), by means (S) for authentication of the operator apparatus (5), so as to identify the called parties (A1) accessing the centralization server (4) to update the centralized database (DB_ENUM), and limit access to the centralization server (4) to called parties (A1) previously recorded in the course of a step of declaration (71) of the called parties (A1) with managers of the operator apparatus (5).

23. Method according to one of Claims 17 to 22, **characterized in that**, when a calling party (A2) requests the establishment (70) of a communication (COM) with a called party (A1), via the communication network/networks (RC), communication means (20) of at least one calling terminal (2) that this calling party (A2) uses implement a step of dispatching (73), via the communication network/networks (RC), to at least one operator apparatus, of a request (RT) for establishment of a communication, so as to reach at least one called party (A1) on at least one called terminal (1) and to communicate with this called terminal (1).

24. Method according to Claim 23, **characterized in that** step (73) of dispatching the request (RT) for establishment of a communication is accompanied by the step of consultation (51), by the operator apparatus (5), of the user database (DB_U) of the operator apparatus (5), and then by a step of redirection (78), by the means (MR) of redirection of the operator apparatus (5), this redirection (78) comprising a step of dispatching a request (NAPTR) for obtaining the communication identifiers (FQDN) of a called party (A1), to the centralization server (4) corresponding to the called party, for consultation (96) of the centralized database (DB_ENUM) of this centralization server (4).

25. Method according to one of Claims 17 to 22, **characterized in that**, when a calling party (A2) requests the establishment (70) of a communication (COM) with a called party (A1), via the communication network/networks (RC), communication means (20) of at least one calling terminal (2) that this calling party (A2) uses implement a step of dispatching (73bis), via the communication network/networks (RC), to at least one centralization server (4), of a request (NAPTR) for obtaining the communication identifiers (FQDN) of a called party (A1), so as to obtain the identifiers (FQDN) of the called party (A1), for consultation (96) of the centralized database (DB_ENUM) of this centralization server (4).

26. Method according to Claim 25, **characterized in that** the step (73bis) of dispatching a request (NAPTR) for obtaining the communication identifiers (FQDN) of a called party (A1), to at least one centralization server, is accompanied, when this request (NAPTR) is addressed in a manner which is erroneous or incomplete or not suited to the network/networks (RC), by a step of consultation (51), by the means (MR) of redirection of the operator apparatus (5), of the user database (DB_U) of the operator apparatus (5) storing the centralization servers corresponding to a plurality of called parties (A1), so as to identify, as a function of the called party (A1), the centralization server (4) to which this request (NAPTR) must be dispatched, and then by a step of redirection (77), by the means (MR) of redirection of the operator apparatus (5), of this request (NAPTR) for obtaining the communication identifiers (FQDN) to this identified server, for consultation (96) of the centralized database (DB_ENUM) of this centralization server (4).

27. Method according to one of Claims 25 and 26, **characterized in that** the step (73bis) of dispatching the request (NAPTR) for obtaining the communication identifiers (FQDN) of the called party (A1), is accompanied by the step of consultation (51), by the operator apparatus (5), of the user database (DB_U) of the operator apparatus (5), also storing data relating to confidentiality parameters of the unique number (1ID) and communication identifiers (FQDN) of the called party (A1), these data allowing the called parties (A1) to define, at the operator apparatus (5), the calling parties (A2) authorized to obtain their communication identifiers (FQDN) and/or their unique number (1ID), the method comprising a step of authentication (72) of the calling parties (A2) accessing the centralization server (4) to obtain the communication identifiers (FQDN) and/or the unique number (1ID) of a called party (A1), in such a way as to limit access to the centralization server (4) to calling parties (A2) previously recorded by the called parties (A1) in the course of a step of declaration (71) of the calling parties (A2) with managers of the operator apparatus (5).

28. Method according to one of Claims 17 to 27, **characterized in that** the steps of consultation (51) of the user database (DB_U) and of redirection (77, 78) are implemented by operator apparatuses (5') other than the operator apparatus (5) of the system and comprising at least one user database (DB_U) and data transmission redirection means (MR), so as to allow interoperability between the various communication operators.

29. Method according to one of Claims 24 to 28, **characterized in that** the step of consultation (96) of the centralized database (DB_ENUM) of the centralization server (4) is accompanied by the following steps:
- reception (91), by communication means (40) of the centralization server (4), via the communication network/networks (RC), of the request (NAPTR) for obtaining the communication identifiers (FQDN) of a called party (A1) identified by its unique number (1 ID),
- processing (92) of the request (NAPTR) for obtaining identifiers and identification of the unique number (1ID) of the called party (A1) in the centralized database (DB_ENUM), by means (41) for processing data of the centralization server (4),
- formulation (93) of a response comprising the list (NAPTR_RR) of corresponding identifiers (FQDN), this list (NAPTR_RR) being automatically limited as a function of the reachability data (DJ), by virtue of the step of updating (90) of the centralized database (DB_ENUM),
- dispatching (94), by the communication means (40) of the centralization server (4), of the response comprising a list (NAPTR_RR) of communication identifiers (FQDN) corresponding to the unique number (1ID) of the called party (A1).

30. Method according to one of Claims 24 to 29, **characterized in that** the step of consultation (96) of the centralized database (DB_ENUM) of the centralization server (4), is accompanied by the following steps:
- reception (74) by the communication means (20) of the calling terminal (2), of the response containing the list (NAPTR_RR) of communication identifiers (FQDN) of the called party (A1),
- processing (75), by the calling management module (M2) of the calling terminal (2), of the response containing the list (NAPTR_RR) of communication identifiers (FQDN) of the called party (A1) and commencement (76) of a communication (COM), by an application launcher (M20) of the calling management module (M2), managing the communication means (20) so as to select the medium corresponding to the priority communication identifier (FQDN) in the list (NAPTR_RR) received.

31. Method according to Claim 30, **characterized in that** when the calling party (A2) requests the establishment (70) of a communication (COM) with a called party (A1), this called party (A1) being identified by the calling management module (M2), implemented in means (21) for processing data of the calling terminal (2), by virtue of at least one unique number (1ID) and/or at least one communication identifier (FQDN), which is (are) stored in means (23) of storage of the calling terminal (2).

32. Method according to one of Claims 24 to 31, **characterized in that** the step of consultation (96) of the centralized database (DB_ENUM) of the centralization server (4), subsequent to a redirection (77, 78) by the operator apparatus, is accompanied by the following steps:
- processing (97), by the means (MR) of redirection of the operator apparatus (5), of the list (NAPTR_RR) of communication identifiers (FQDN) of the called party (A1),
- commencement (98) of a communication (COM), by the means (MR) of redirection of the operator apparatus (5), so as to redirect the communication (COM) onto a medium corresponding to the priority communication identifier (FQDN) in the profile (P) activated in the course of the time slot (TH) in which the request (RT) for establishment of a communication (COM) by the calling terminal (2) takes place, when the calling terminal (2) is compatible with this medium

33. Method according to Claim 32, **characterized in that** the step of commencement (98) of the communication (COM), by the means (MR) of redirection of the operator apparatus (5), comprises a step of conversion (99), by means (MC) of media conversion of the operator apparatus (5), which are activated when, on the one hand, the calling terminal (2), sending the request (RT) for establishment of a communication (COM), uses a different medium from that corresponding to the priority communication identifier (FQDN) in the profile (P) activated in the course of the time slot (TH) in which the request (RT) for establishment of a communication (COM) by the calling terminal (2) takes place and, on the other hand, the calling terminal (2) is not compatible with this medium, this conversion step (99) consisting in converting the data transmitted by the calling terminal (2) into data compatible with this medium.
